# EUROPÄISCHE PATENTSCHRIFT

(11) **EP 2 479 664 B1**
(45) Veröffentlichungstag und Bekanntmachung des Hinweises auf die Patenterteilung: **06.10.2021**
(21) Anmeldenummer: 12151052.3
(22) Anmeldetag: 13.01.2012
(51) Int. Cl.: G06F 8/34, G06F 8/35

(54) **System und Verfahren zum Erzeugen eines Quellcodes für ein Computerprogramm**
System and method for generating a source code for a computer program
Système et procédé de production d'un code source pour un programme informatique

(30) Priorität: 17.01.2011 DE 102011000185
(43) Veröffentlichungstag der Anmeldung: 25.07.2012
(73) Patentinhaber: Allgeier IT Solutions GmbH, 28307 Bremen (DE)
(72) Erfinder: Fleischmann, Albert, 85276 Pfaffenhofen (DE)
(74) Vertreter: HGF

(56) Entgegenhaltungen:
- EP-A2- 1 589 416
- SOBOCZENSKI F: "Anwenderhandbuch jPass!", INTERNET CITATION, 3. März 2005 (2005-03-03), XP002442913, Gefunden im Internet: URL:htpp://www.bw.fh-deggendorf.de/kurse/s wt_neu/Toollabor/Anwenderhandbuch_iPass.pd f [gefunden am 2007-07-05]
- ALBERT FLEISCHMANN ET AL: "Coherent Task Modeling and Execution Based on Subject-Oriented Representations", 23. September 2009 (2009-09-23), TASK MODELS AND DIAGRAMS FOR USER INTERFACE DESIGN, SPRINGER BERLIN HEIDELBERG, BERLIN, HEIDELBERG, PAGE(S) 78 - 91, XP019138347, ISBN: 978-3-642-11796-1 * Zusammenfassung * * Seite 81, Absatz 3 - Seite 83, Absatz 1 * * Seite 83, Absatz 5 - Seite 90, Absatz 3 *
- FLORIAN GOTTSCHALK ET AL: "SAP WebFlow Made Configurable: Unifying Workflow Templates into a Configurable Model", 24. September 2007 (2007-09-24), BUSINESS PROCESS MANAGEMENT; [LECTURE NOTES IN COMPUTER SCIENCE], SPRINGER BERLIN HEIDELBERG, BERLIN, HEIDELBERG, PAGE(S) 262 - 270, XP019072049, ISBN: 978-3-540-75182-3 * Zusammenfassung * * Seite 1, Absatz 1 - Seite 2, Absatz 1 *
- "Lecture 28 Architecture of Parallel Computers Spring 2001", , 11 May 2001 (2001-05-11), pages 1-8, XP055268158, Retrieved from the Internet: URL:http://people.engr.ncsu.edu/efg/506/s0 1/lectures/notes/lec28.pdf [retrieved on 2016-04-25]

## Beschreibung

Die vorliegende Erfindung betrifft ein System und ein Verfahren zum Erzeugen eines Quellcodes für ein Computerprogramm zur Ausführung bzw. Simulation eines Prozesses, bei dem mehrere Subjekte miteinander kommunizieren.

Ein Verfahren zum Erzeugen eines Quellcodes für ein Computerprogramm zur Ausführung bzw. Simulation eines komplexen Prozesses, bei dem eine Vielzahl von Subjekten miteinander kommunizieren, geht aus der US 7,861,221 hervor. Bei diesem Verfahren werden die Prozesse beschrieben, die Beschreibung der Prozesse in einer Prozessdatei gespeichert und anhand der Prozessdatei ein Quellcode für ein Computerprogramm erzeugt, wobei für ein jedes Subjekt eine separate Quellcodedatei erzeugt wird.

Durch das Vorsehen einer Quellcodedatei für ein jedes Subjekt kann ein komplexer Prozess einfach und damit automatisch in mehrere Teilprogramme, den Quellcodedateien, aufgeteilt werden, die automatisch erzeugbar sind. Hierdurch kann für einen sehr komplexen Prozess automatisch ein Computerprogramm erzeugt werden.

Ein weiterer Vorteil dieses bekannten Verfahrens liegt darin, dass es nach der automatischen Erzeugung sofort ausgeführt werden kann, d.h., es kann unmittelbar nach Erzeugung bei einer Ausführung validiert werden.

Soboczenski F., "Anwenderhandbuch jPass!", XP 00244 2913, ist ein Anwenderhandbuch einer Software, die auf dem oben erläuterten Verfahren beruht.

In Florian Gottschalk et al., "SAP WebFlow Made Configurable Unifying Workflow Templates into a Configurable Model", 24. September 2007, Business Process Management, Springer Berlin-Heidelberg, Seiten 262-270, XP 019072049,ISBN 978-3-540-75182-3 offenbart die Verwendung von konfigurierbaren Workflow-Vorlagen (Templates), um die Modellierung von Workflows zu vereinfachen. Bei der Modellierung eines Workflows werden die konfigurierbaren Vorlagen verwendet und für die jeweilige Anwendung spezifiziert, sodass ein Prozess korrekt dargestellt werden kann. Durch die Verwendung derartiger konfigurierbarer Workflow-Vorlagen wird die Gesamtzahl der Vorlagen verringert, wodurch die Modellierung des Prozesses vereinfacht werden soll.

Der Erfindung liegt die Aufgabe zugrunde, ein solches System bzw. ein solches Verfahren zum Erzeugen eines Quellcodes für ein Computerprogramm zur Ausführung bzw. Simulation eines Prozesses aus einer vom Quellcode unabhängigen Prozessbeschreibung derart weiterzubilden, dass die Erstellung der Prozessbeschreibung eines komplexen Prozesses und damit die Erzeugung des Quellcodes wesentlich einfacher, schneller und fehlerfreier ausführbar ist.

Die Aufgabe wird durch ein System mit dem Merkmal des Anspruchs 1 und durch ein Verfahren mit dem Merkmal des Anspruchs 8 gelöst. Vorteilhafte Ausgestaltungen sind in den jeweiligen Unteransprüchen angegeben.

Das erfindungsgemäße System zum Erzeugen eines Quellcodes für ein Computerprogramm zur Ausführung bzw. Simulation eines Prozesses aus einer vom Quellcode unabhängigen, insbesondere grafischen Prozessbeschreibung, umfasst einen Prozessgenerator zur Erzeu gung der Prozessbeschreibung und eine Prozessdatei und einen Quellcodegenerator zur automatischen Erzeugung eines Quellcodes aus der Prozessdatei. Der Prozessgenerator weist einen Prozessmanager auf und der Prozessmanager ist zum Beschreiben eines Prozesses mit folgenden Funktionen ausgebildet:
- Funktion zum Erzeugen eines Clusters mit einer vorbestimmten Anzahl von Subjekten, wobei diese Funktion derart ausgebildet ist, dass jeweils zwei Nachrichten zwischen allen Paaren von Subjekten des Clusters automatisch erzeugt werden, wobei ein jedes Subjekt eine der beiden Nachrichten des jeweiligen Paars von Nachrichten sendet und die andere Nachricht empfängt.
- Funktion zum Löschen einzelner automatisch erzeugter Nachrichten.
- Funktion zum Erzeugen einzelner Nachrichten zwischen einem der Subjekte des bestimmten Clusters und einem Subject, das nicht Bestandteil dieses einen bestimmten Clusters ist.
- Funktion zum Speichern der den bzw. die Cluster enthaltenen Prozessbeschreibung in eine Prozessdatei, wobei die Prozessbeschreibung automatisch in eine Metasprache umgesetzt wird, und in dieser Metasprache in der Prozessdatei gespeichert wird, wobei in der Metasprache Subjekte definiert sind und die Subjekte Befehle zum Senden und/oder Empfangen von Nachrichten enthalten.

Mit der Funktion zum Erzeugen eines Clusters mit einer vorbestimmten Anzahl von Subjekten wird alleine durch Vorgabe der Anzahl der Subjekte eine Prozessbeschreibung erzeugt, die eine entsprechende Anzahl von Subjekten und Nachrichten aufweist, wobei zwischen einem jeden Paar von Subjekten zwei Nachrichten ausgetauscht werden, wobei ein jedes Subjekt eine der beiden Nachrichten empfängt bzw. sendet. Hierdurch wird ein Cluster mit einer vorbestimmten Anzahl von Subjekten und allen möglichen Nachrichten zwischen den Subjekten automatisch erzeugt.

Mit den weiteren Funktionen können einzelne Nachrichten zwischen den Subjekten des Clusters gelöscht werden und weitere Nachrichten zu Subjekten außerhalb des Clusters erzeugt werden.

Die automatisch erzeugte Prozessbeschreibung eines Clusters stellt zunächst einen Universalprozess mit einer vorbestimmten Anzahl von Subjekten dar und allen theoretisch möglichen Kommunikationsverbindungen.

Durch Löschen einzelner Nachrichten kann der Universalprozess zu einem speziellen Prozess umgeformt werden. Diese Reduzierung des Universalprozesses durch Streichen einzelner Nachrichten zu einem speziellen Prozess wird als Restriktion bezeichnet.

Die Erfinder der vorliegenden Erfindung haben erkannt, dass bei der Simulation bestimmter Prozesse bestimmte Gruppen von Subjekten in der Regel eine bestimmte Aufgabe gemeinsam lösen, wobei dann meistens fast alle Subjekte miteinander kommunizieren. Deshalb haben die Erfinder ein System vorgesehen, das automatisch entsprechende Cluster von Subjekten für derartige, an einem Problem gemeinsam arbeitenden Subjekte erstellt, wobei gleichzeitig alle möglichen Nachrichten zwischen den Subjekten erzeugt werden. In der Regel werden lediglich einige wenige Nachrichten gelöscht, um den Prozess zur Lösung eines bestimmten Problems innerhalb eines Clusters korrekt darzustellen. Die automatische Erzeugung der Subjekte und aller Nachrichten zwischen den Subjekten bewirkt daher eine erhebliche Vereinfachung und Beschleunigung des Erstellens der entsprechenden Prozessbeschreibung. Diese Prozessbeschreibung wird vorzugsweise in einer Metasprache erzeugt, die die einzelnen Subjekte definiert, wobei die Subjekte Befehle zum Senden und Empfangen der Nachrichten enthalten. Vorzugsweise wird diese Prozessbeschreibung in Form eines Blockschaltbildes grafisch auf einer Ausgabeeinrichtung dargestellt (Prozessdiagramm), so dass ein Benutzer lediglich die grafische Prozessbeschreibung bearbeitet und die Prozessbeschreibung in der Metasprache nicht sieht.

Ein weiterer Vorteil der automatischen Erzeugung des Clusters mit allen möglichen Nachrichten liegt darin, dass alle möglichen Nachrichten automatisch vorhanden sind und keine Kommunikationsverbindung zwischen zwei bestimmten Subjekten vergessen werden kann. Die Erstellung der Prozessbeschreibung erfolgt somit wesentlich zuverlässiger und kann auch sicher von Personen ausgeführt werden, die im Erzeugen derartiger Prozessdiagramme nicht so erfahren sind. Sollte eine Nachricht zuviel im Cluster sein, dann hat dies zur Folge, dass sie nicht ausgeführt wird, ohne dass dadurch der Ablauf des Prozesses gestört wird. Würde hingegen eine Nachricht fehlen, dann würde der Prozess nicht ausgeführt werden können. Dieses System ist somit wesentlich robuster gegenüber von Fehlern durch den Benutzer.

Der Prozessgenerator umfasst vorzugsweise einen Prozessmanager und einen Subjektmanager und insbesondere einen Workflow-Manager.

Der Prozessmanager dient zum Erzeugen der insbesondere grafischen Prozessbeschreibung (Prozessdiagramm) und der Subjektmanager dient zum Verändern des Verhaltens einzelner Subjekte.

Der Prozessgenerator ist vorzugsweise ein Softwaremodul, wobei der Prozessmanager eine grafische Benutzeroberfläche (GUI) des Prozessgenerators zum Darstellen und Bearbeiten eines Prozessdiagramms mit mehreren Subjekten und der Subjektmanager eine grafische Benutzeroberfläche (GUI) zum Darstellen und Bearbeiten einzelner Subjekte sind.

Der Workflow-Manager ist eine weitere Benutzeroberfläche des Prozessgenerators, die nicht notwendigerweise eine graphische Benutzeraberfläche ist. Der Workflow-Manager ist derart ausgebildet, dass er den Benutzer entlang aufeinanderfolgender Zustände der einzelnen Subjekts führt, so dass der Benutzer durch Eingaben das Verhalten des entsprechenden Subjekts verändern kann.

Der Prozessmanager weist vorzugsweise eine oder mehrere der folgenden Funktionen auf:
- Funktion zum Verändern des Namens der einzelnen Nachrichten, wobei beim Ausführen dieser Funktion automatisch der geänderte Name der Nachricht in die entsprechende Befehle der Subjekte zum Abarbeiten der Nachricht, insbesondere den Sende- und Empfangsbefehlen eingetragen wird,
- Funktion zum Verändern des Namens eines Subjektes, wobei beim Ausführen dieser Funktion automatisch der geänderte Name des Subjektes in die entsprechenden Befehle der Subjekte eingetragen wird, die auf dieses Subjekt referenzieren,
- Funktion zum Festlegen, welches Subjekt als erstes eine Nachricht sendet,
- Funktion zum Festlegen der Reihenfolge des Sendens der einzelnen Nachrichten, wobei in einzelnen Subjekten eine Verzweigung von Nachrichten-Flüssen auf Grundlage einer Entscheidung mit entsprechenden Bedingungen festgelegt werden kann.

Der Subjektmanager weist vorzugsweise eine oder mehrere der folgenden Funktionen auf:
- Funktion zum Beschränken des Inhalts einer zu empfangenden Nachricht,
- Funktion zum Beschränken der Menge der potentiellen Absender einer zu empfangenden Nachricht,
- Funktion zum Wiederholen bestimmter Befehle,
- Funktion zum Integrieren von einem Refinement in ein Subjekt,
- Funktion zum Ausgeben von Daten an einer Ausgabeeinrichtung,
- Funktion zum Einlesen von Daten an einer Eingabeeinrichtung,
- Funktion zum Ausführen einer Entscheidung in Abhängigkeit vorbestimmter Parameter,
- Funktion zum Beenden des Prozessablaufs.

Mit diesen Funktionen kann ein Benutzer einfach und schnell den Nachrichten-Fluss zwischen den einzelnen Subjekten in der vorzugsweise grafischen Prozessbeschreibung festlegen, wobei er mittels des Subjektmanagers das Verhalten einzelner Subjekte verändern kann. Insbesondere ist es möglich, mit dem Subjektmanager Refinements in ein Subjekt zu integrieren, d.h., bestehende Programme oder Programmpakete durch ein Subjekt aufzurufen, zur Ausführung zu bringen und das Ergebnis in Form von Daten zu übernehmen, die dann in einem Befehl des Subjektes weiter verwendet werden können. Beispielsweise ist es möglich, dieses Ergebnis als Grundparameter einer Entscheidung für eine Verzweigung des Nachrichtenflusses zu verwenden oder in einer Nachricht als Inhalt aufzunehmen.

Mit dem erfindungsgemäßen System können komplexe Prozesse einfach simuliert werden, wobei für Einzelprobleme, die innerhalb eines komplexen Prozesses gelöst werden, separate Cluster erzeugt werden. Diese einzelnen Cluster werden mittels Nachrichten zwischen in den jeweiligen Clustern enthaltenen Subjekten miteinander verbunden. Das Modulieren eines komplexen Prozesses ist sehr einfach, da die einzelnen Cluster unabhängig voneinander erzeugt werden können, unabhängig voneinander getestet werden können, und danach lediglich mittels eines Nachrichtenaustausches verbunden werden. Es hat sich in der Praxis gezeigt, dass die Kommunikation zwischen den einzelnen Clustern mit wesentlich weniger Nachrichtenaustauschen als innerhalb der einzelnen Cluster erfolgt. Daher ist es zweckmäßig, zwischen Subjekten unterschiedlicher Cluster die Nachrichten individuell zu erzeugen. Dies wird auch als Konstruktion bezeichnet.

Weiterhin betrifft die vorliegende Erfindung ein Verfahren zum Erzeugen eines Quellcodes für ein Computerprogramm zur Ausführung bzw. Simulation eines Prozesses, bei dem mehrere Subjekte miteinander kommunizieren. Das Verfahren umfasst folgende Schritte:
- Erzeugen einer Prozessbeschreibung, wobei zumindest ein bestimmtes Cluster mit einer vorbestimmten Anzahl von Subjekten festgelegt wird, und zumindest ein weiteres Subjekt definiert wird, das Bestandteil eines weiteren Clusters sein kann,
- automatisches Erzeugen jeweils zweier Nachrichten zwischen allen Paaren von Subjekten des Clusters, wobei ein jedes Subjekt eine der beiden Nachrichten des jeweiligen Paars sendet und die andere empfängt,
- Bereitstellen einer Funktion zum Löschen einzelner der automatisch erzeugten Nachrichten,
- Bereitstellen einer Funktion zum Erzeugen einzelner Nachrichten zwischen einem der Subjekte des bestimmten Clusters und einem Subjekt, das nicht Bestandteil dieses einen bestimmten Clusters ist,
- Speichern der Prozessbeschreibung mit den eingegebenen Definitionen in einer Prozessdatei,
- automatisches Erzeugen zumindest einer Quellcodedatei für ein Computerprogramm, das jeweils Befehle zum Austausch von Daten zwischen den einzelnen Subjekten enthält.

Das Erzeugen der Prozessbeschreibung eines Clusters erfolgt automatisch, wobei lediglich die Anzahl der Subjekte des Clusters vom Benutzer vorgegeben werden. Mit dem Verfahren können auch mehrere Cluster erzeugt werden, die dann mittels individueller Nachrichten, die zwischen den Subjekten der jeweiligen Cluster ausgetauscht werden, verbunden werden.

Vorzugsweise wird für einen jeden Cluster eine separate Quellcodedatei erzeugt. Hierdurch ist es möglich, dass unterschiedliche Cluster auf unterschiedlichen Computern ablaufen und über ein LAN (Local Area Network) oder ein WAN (Wide Area Network), insbesondere das Internet, miteinander kommunizieren.

Mit dem erfindungsgemäßen Verfahren wird in der Simulation der Austausch beliebiger Gegenstände durch den Austausch von Information simuliert. Ein Aspekt dieses erfindungsgemäßen Simulationssystems ist somit jeglichen Austausch von Information, Waren, Geldwerten, etc. zwischen den Subjekten auf den "Austausch von Information" (= Nachrichten) abzubilden.

Die Prozessbeschreibung kann im erfindungsgemäßen System und Verfahren separat von der in der Prozessdatei enthaltenen Prozessbeschreibung in Form der Metasprache erstellt und gespeichert werden. Es ist jedoch auch möglich, dass alleine die Prozessbeschreibung in der Prozessdatei in Form der Metasprache gespeichert wird und der Prozessgenerator eine Funktion aufweist, die die Prozessbeschreibung in der Metasprache in eine andere, von einem Benutzer einfach lesbare Darstellung, insbesondere eine grafische Darstellung in Form eines Blockschaltbildes umsetzt. Die Prozessbeschreibung kann jedoch auch in Form eines Prosatextes vorliegen, der die einzelnen Subjekte kurz beschreibt und deren Verhalten erläutert. Jedoch wird eine grafische Darstellung in Form eines Prozessdiagramss erheblich bevorzugt, da mit dieser einfach und übersichtlich ein komplexer Prozess oder ein Teil eines komplexen Prozesses mit all seinen Subjekten und Nachrichten übersichtlich darstellbar ist.

Durch das Festlegen der Reihenfolge der Nachrichten, die zwischen einzelnen Subjekten ausgetauscht werden, wird das Verhalten der die Nachrichten empfangenden bzw. sendenden Subjekte definiert, da dies das Verhalten der Subjekte im Wesentlichen dadurch bestimmt, wann es welche Nachricht empfängt und wann es welche Nachricht sendet. Das Verhalten der Subjekte kann weiter mittels des Subjektmanagers oder Workflow-Managers präzisiert werden, indem zwischen den Befehlen zum Empfangen und zum Senden von Nachrichten weitere Befehle zum Ausführen einer Handlung (Befehl: TUN) bzw. Befehle zum Ausführen einer Entscheidung eingefügt werden können.

Das erfindungsgemäße System zum Erzeugen eines Quellcodes für ein Computerprogramm umfasst vorzugsweise einen Computer mit einer Ausgabeeinrichtung und einer Eingabeeinrichtung, wobei der Prozessgenerator und der Quellcodegenerator auf dem Computer gespeicherte und ausführbare Software-Module sind.

Der Quellcodegenerator und der Prozessgenerator sind vorzugsweise zwei unabhängige Software-Module. Sie können jedoch auch in einem Software-Modul integriert sein. Dies gilt insbesondere, wenn der Quellcode mittels eines Interpreters ausgeführt wird. Der Interpreter kann so ausgebildet sein, dass er die Prozessbeschreibung in der Metasprache unmittelbar ausführen kann, so dass die Erzeugung des Quellcodes unmittelbar mit der Erzeugung der Prozessbeschreibung in der Metasprache erfolgt. Dieser Quellcde ist vorzugsweise in separaten Dateien für die jeweiligen Cluster abgespeichert und ausführbar sein. Es ist jedoch auch möglich, dass der Quellcode mehrerer Cluster in einer Datei abgespeichert ist.

Bei Verwendung eines Compilers zum Umsetzen des Quellcodes in einen Maschinencode, der auf einem vorbestimmten Computer ausführbar ist, ist es jedoch zweckmäßig, einen separaten Quellcodegenerator vorzusehen, der aus der Prozessbeschreibung einen vom Compiler lesbaren Quellcode erzeugt. Der Quellcode wird dann für jeweils ein Cluster separat in ähnlicher Weise erzeugt, wie es aus der US 7,861,221 bekannt ist, um einen Quellcode für ein einzelnes Subjekt zu erzeugen.

Die vorliegende Erfindung stellt eine Weiterentwicklung des Gegenstandes der US 7,861,221 bzw. der DE 10 2005 018 864 A1 dar. Es wird deshalb vollinhaltlich auf den Gegenstand dieser beiden Dokumente Bezug genommen.

Die Erfindung wird nachfolgend beispielhaft näher anhand der Zeichnungen erläutert. Die Zeichnungen zeigen in:
- Fig. 1: schematisch in einem Blockschaltbild ein erfindungsgemäßes System zum Erzeugen eines Quellcodes für ein Computerprogramm,
- Fig. 2: einen Cluster mit drei Subjekten in einem Prozessdiagramm,
- Fig. 3 und 4: das Verhalten jeweils eines Subjektes in einem Zustandsübergangsdiagramm,
- Fig. 5: die Struktur einer Nachricht,
- Fig. 6: einen Cluster mit vier Subjekten in einem Prozessdiagramm,
- Fig. 7: das Verhalten eines Subjektes in einem Zustandsübergangsdiagramm,

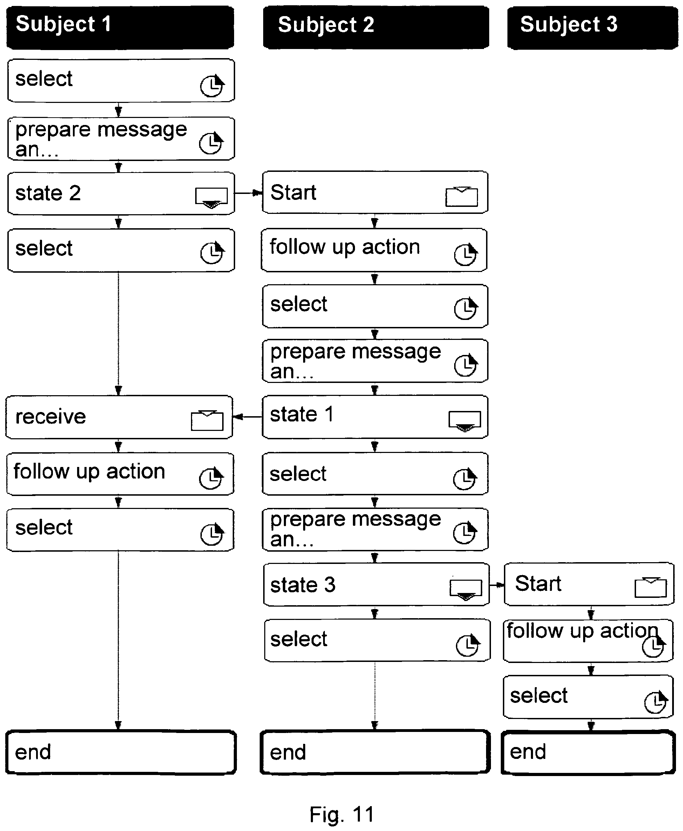

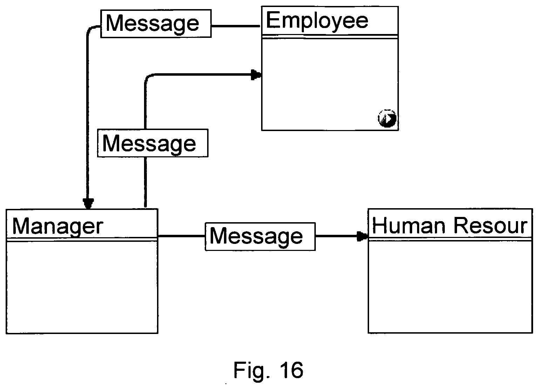

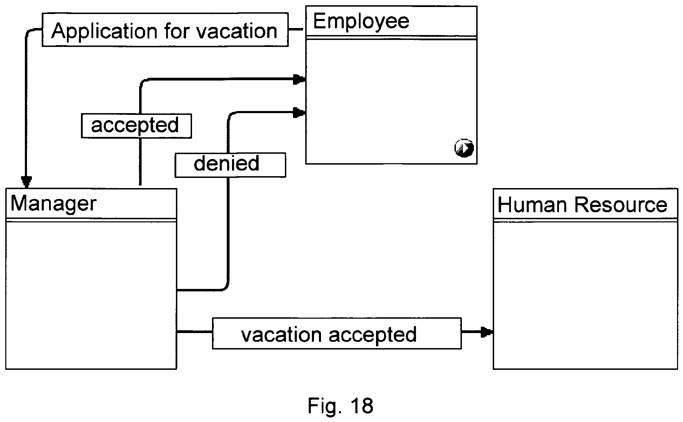

- Fig. 8 bis 23: ein Beispiel zur Modellierung des Prozesses zur Beantragung einer Urlaubsbewilligung mit Prozessdiagrammen (Fig. 8, Fig. 12, Fig. 16, Fig. 18), mit Screenshots (Fig. 9, Fig. 10) einem Swimm-Lane-Diagramm (Fig. 11) mit Zustandsübergangsdiagrammen (Fig. 13, 14, 15, 17, 19, 20, 21, 22) und der Struktur einer Nachricht (Fig. 23).

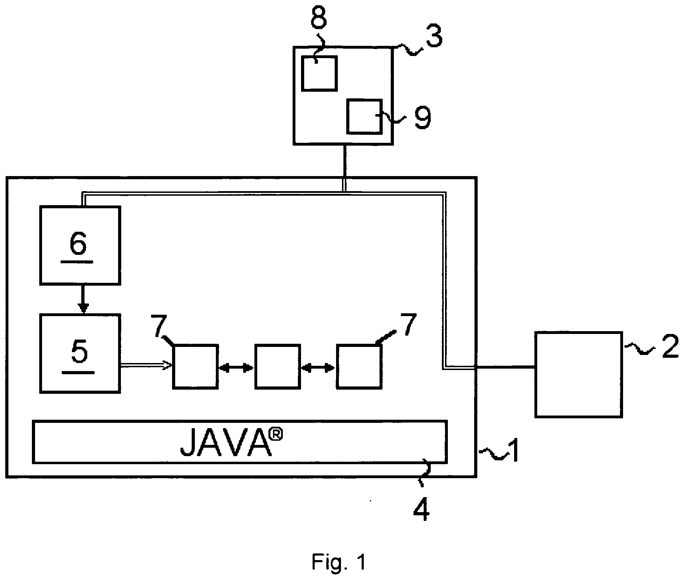

Fig. 1 zeigt schematisch in einem Blockschaltbild ein System zum Erzeugen eines Quellcodes für ein Computerprogramm zur Ausführung bzw. Simulation eines Prozesses, bei dem mehrere Subjekte miteinander kommunizieren. Das System umfasst ein Computersystem 1, das im Sinne der vorliegenden Erfindung ein einzelner Computer als auch ein Netzwerk umfasst und eine Vielzahl von Computern sein kann. Das Computersystem 1 weist zumindest eine Eingabeeinrichtung 2, umfassend eine Tastatur und eine Computermaus, sowie eine Ausgabeeinrichtung 3 auf. Die Ausgabeeinrichtung ist typischerweise ein Monitor oder ein Beamer. Im Computersystem 1 ist eine Java^{®}-Plattform 4 vorgesehen.

Das System weist einen Quellcodegenerator 5 und einen Prozessgenerator 6 auf. Der Prozessgenerator ist ein Computerprogramm, das zur Erzeugung einer Prozessbeschreibung und einer Prozessdatei dient. Der Quellcodegenerator ist ein weiteres Computerprogramm, das zum automatischen Erzeugen eines Quellcodes 7 aus der Prozessdatei ausgebildet ist.

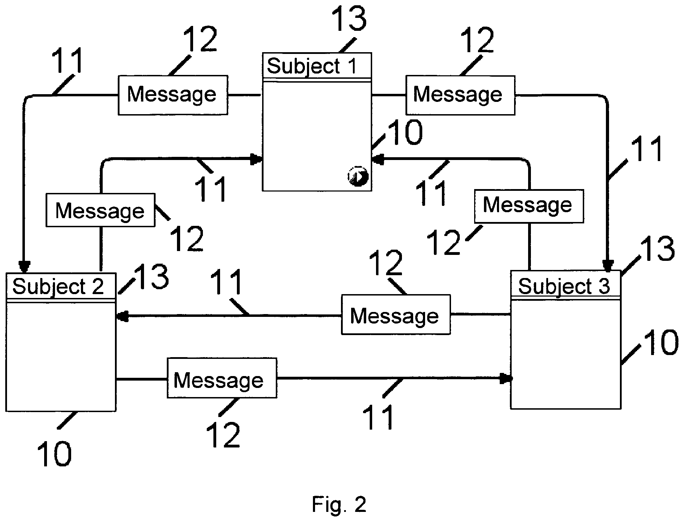

Der Prozessgenerator 6 weist einen Prozessmanager 8 und einen Subjektmanager 9 auf. Der Prozessmanager 8 ist eine grafische Benutzeroberfläche, mit welcher ein Prozess beschrieben werden kann. Im vorliegenden Ausführungsbeispiel ist der Prozessmanager zum Erstellen eines grafischen Prozessdiagrammes ausgebildet, bei dem der Prozess in Form eines Blockschaltbildes (z.B. Fig. 2) dargestellt ist, wobei die einzelnen Subjekte 10 als Blöcke dargestellt werden und die Nachrichten zwischen den Subjekten 10 als Pfeile 11 dargestellt werden, die bei einem Subjekt beginnen, von dem die Nachricht abgesandt wird und die bei einem Subjekt enden, das diese Nachricht empfängt. Diese Pfeile weisen jeweils ein Kästchen 12 auf, in dem der Name der Nachricht angegeben ist. Die die Subjekte darstellenden Blöcke 10 im Prozessdiagramm weisen eine Kopfzeile 13 auf, in der der Name des jeweiligen Subjektes angegeben ist.

Mit dem Prozessmanager 8 kann somit ein gesamter Prozess oder ein Teil eines Prozesses mit mehreren Subjekten dargestellt und bearbeitet werden.

Der Subjektmanager 9 ist eine weitere grafische Benutzeroberfläche des Prozessgenerators 6, die zum Verändern des Verhaltens der Subjekte ausgebildet ist. Mit dem Subjektmanager können einzelne im Subjekt enthaltene Befehle verändert werden. Mit dem Subjektmanager werden die in einem Subjekt enthaltenen Befehle dargestellt. Dies kann beispielsweise in Form eines Blockdiagrammes erfolgen, wobei jeder Befehl durch einen Block dargestellt ist, und die einzelnen Blöcke mittels Pfeile verbunden sind, wobei die Pfeile Nachrichten darstellen, die zwischen einzelnen Befehlen ausgetauscht werden. Die einzelnen Befehle und Nachrichten können im Subjektmanager auch mittels Texteingabe verändert werden, wobei beim Anklicken eines Befehls oder einer Nachricht ein entsprechendes Eingabefenster aufgeht, in den dann Parameter, Ressourcen, auf welche die Befehle zurückgreifen, Empfänger von Nachrichten oder jegliche andere Restriktionen eingegeben werden können.

Der Prozessmanager weist zum Beschreiben eines Prozesses zumindest folgende Funktionen auf:
- Funktion zum Erzeugen eines Clusters mit einer vorbestimmten Anzahl von Subjekten, wobei diese Funktion derart ausgebildet ist, dass jeweils zwei Nachrichten zwischen allen Paaren von Subjekten des Clusters automatisch erzeugt werden, wobei ein jedes Subjekt eine der beiden Nachrichten des jeweiligen Paares sendet und die andere Nachricht empfängt,
- Funktion zum Löschen einzelner automatisch erzeugter Nachrichten,
- Funktion zum Erzeugen einzelner Nachrichten zwischen einem der Subjekte des bestimmten Clusters und einem Subjekt, das nicht Bestandteil dieses einen bestimmten Clusters ist,
- Funktion zum Speichern der den bzw. die Cluster enthaltenden Prozessbeschreibung in eine Prozessdatei, wobei die Prozessbeschreibung automatisch in eine Metasprache umgesetzt wird, und in dieser Metasprache in der Prozessdatei gespeichert wird, wobei in der Metasprache Subjekte definiert sind und die Subjekte Befehle zum Senden und/oder Empfangen von Nachrichten enthalten.

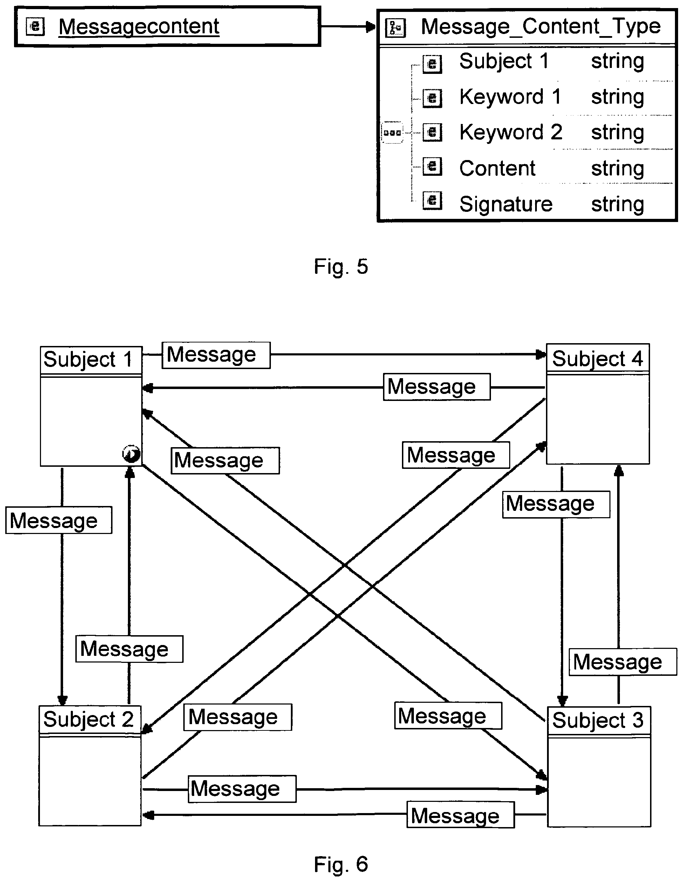

Wenn der Benutzer die Funktion zum Erzeugen eines Cluster mit einer vorbestimmten Anzahl von Subjekten aufruft, dann wird der Benutzer gebeten, der Anzahl der Subjekte einzugeben. Auf diese Eingabe erzeugt der Prozessgenerator einen vollständigen Cluster mit der vorbestimmten Anzahl von Subjekten, wobei auch zwischen einem jeden Paar von Subjekten zwei Nachrichten erzeugt werden, wobei die eine Nachricht von einem der beiden Subjekte zum anderen der beiden Subjekte gesendet wird und die andere Nachricht in umgekehrter Richtung gesendet wird. Die Subjekte enthalten als Vorgabe-Name die Namen "Subject#", wobei "#" für die Nummer des Subjektes steht. Die einzelnen Subjekte werden automatisch mit ganzen Zahlen von 1 bis n (1, 2, ... , n) durchnummeriert. Die einzelnen Nachrichten enthalten als Vorgabe-Name den Namen "Message". Der Cluster wird im Prozessmanager als Prozessdiagramm dargestellt. Fig. 2 zeigt einen solchen Cluster mit drei Subjekten und Fig. 6 zeigt einen solchen Cluster mit vier Subjekten.

Mit zunehmender Anzahl der Subjekte erhöht sich die Anzahl der Nachrichten überproportional zur Anzahl der Subjekte. Bei einem Cluster mit fünf Subjekten ist die Anzahl aller Nachrichten zwanzig, wohingegen bei zehn Subjekten die Anzahl aller Nachrichten bereits neunzig beträgt.

Die Erfinder der vorliegenden Erfindung haben erkannt, dass bei der Simulation bestimmter Prozesse bestimmte Gruppen von Subjekten in der Regel eine bestimmte Aufgabe gemeinsam lösen, wobei dann meistens fast alle Subjekte miteinander kommunizieren. Die Anzahl der Subjekte in einer solchen Gruppe ist in der Regel relativ klein. Komplexe Prozesse können daher in Teilprozesse mit einigen wenigen Subjekten untergliedert werden, die erfindungsgemäß als Cluster dargestellt werden.

Die Anzahl der maximalen Subjekte pro Cluster kann auf einen vorbestimmten Maximalwert im Bereich von 5 bis 15 und vorzugsweise im Bereich von 6 bis 12 beschränkt sein.

Mit der Erfindung werden die Subjekte und alle Nachrichten zwischen den Subjekten automatisch erzeugt, was eine erhebliche Vereinfachung und Beschleunigung des Erstellens einer entsprechenden Prozessbeschreibung bewirkt.

Diese Prozessbeschreibung wird in einer Metasprache erzeugt, die die einzelnen Subjekte definiert, wobei die Subjekte Befehle zum Senden und Empfangen der Nachrichten enthalten. Im vorliegenden Ausführungsbeispiel ist der Prozessmanager 8 derart ausgebildet, dass er aus der in der Metasprache ausgeführten Prozessbeschreibung die grafische Darstellung des Prozessdiagrammes generiert. Der Benutzer sieht lediglich das grafisch dargestellte Prozessdiagramm, in dem er den Prozess weiter modellieren kann. Insbesondere kann er einzelne automatisch erzeugte Nachrichten löschen, wobei Nachrichten gelöscht werden, die bei der Abarbeitung eines bestimmten Problems nicht benötigt werden. Hierdurch wird die Komplexität des Modelles schrittweise verringert. Da alle möglichen Nachrichten vorgegeben sind, kann der Benutzer bei der Modellierung eines Clusters keine Kommunikationsbeziehung zwischen zwei Subjekten übersehen. Er muss lediglich beurteilen, ob die jeweiligen Nachrichten bei der Abarbeitung des Prozesses benutzt werden. Diese Vorgehensweise ist wesentlich weniger fehleranfällig und einfacher für einen im Modellieren von Prozessen unerfahrenen Benutzer im Vergleich zu einem System, bei dem er die einzelnen Nachrichten individuell konstruieren müsste.

Vorzugsweise weist der Prozessgenerator einen Workflow-Manager auf, der den Benutzer bei der Abarbeitung der einzelnen Nachrichten führt. Hierbei kann der Workflow-Manager eigene Benutzeroberflächen aufweisen und/oder bei Bedarf den Prozessmanager oder den Subjektmanager aufrufen.

Zunächst wird der Benutzer vom Workflow-Manager aufgefordert eines der Subjekte zu bestimmn, das als erstes eine Nachricht sendet. Dies ist in Fig. 2 und in Fig. 6 jeweils das Subject 1, das jeweils mit einem weißen Dreieck 14 gekennzeichnet ist. Dieses Subjekt sendet als erstes eine Nachricht. Der Benutzer wird daraufhin vom Workflow-Manager aufgefordert auszuwählen, ob die Nachricht an Subject 2 oder Subject 3 zuerst gesendet wird. Nach der entsprechenden Wahl wird der Benutzer aufgefordert, den Vorgabe-Namen "Message" dieser ausgewählten Nachricht durch einen entsprechenden Namen zu ersetzen. Beim Ersetzen dieses Namens wird ein neuer Name nicht nur im Prozessdiagramm eingetragen, sondern auch in den Befehlen der Subjekte, die die Nachricht senden bzw. empfangen in der Prozessbeschreibung in der Metasprache. Die erfolgt automatisch, ohne dass dies der Benutzer sieht. Danach wird der Benutzer vom Prozessmanager aufgefordert festzulegen, welche Nachricht das Subjekt aussendet, das die erste Nachricht empfangen hat. Hierbei können gleichzeitig Verzweigungen des Nachrichtenflusses definiert werden. Derartige Verzweigungen sind Entscheidungen, die in dem jeweiligen Subjekt ausgeführt werden. Diese Entscheidungen können in Abhängigkeit von vorbestimmten Parametern, die aus der empfangenen Nachricht oder aus sonstigen Ressourcen ausgelesen werden, erfolgen. Der Benutzer wird dann aufgefordert, die Nachricht bzw. die von dem jeweiligen Subjekt gesendeten Nachrichten mit einem entsprechenden Namen zu benennen. Der Benutzer wird somit schrittweise entlang dem Nachrichtenfluss geführt, wobei bei Verzweigungen zunächst ein Zweig des Nachrichtenflusses abgearbeitet und dann der andere Zweig des Nachrichtenflusses abgearbeitet wird. Nachrichten, die nicht Bestandteil des Nachrichtenflusses sind, werden entweder vor oder nach der Umbenennung der einzelnen Nachrichten gelöscht.

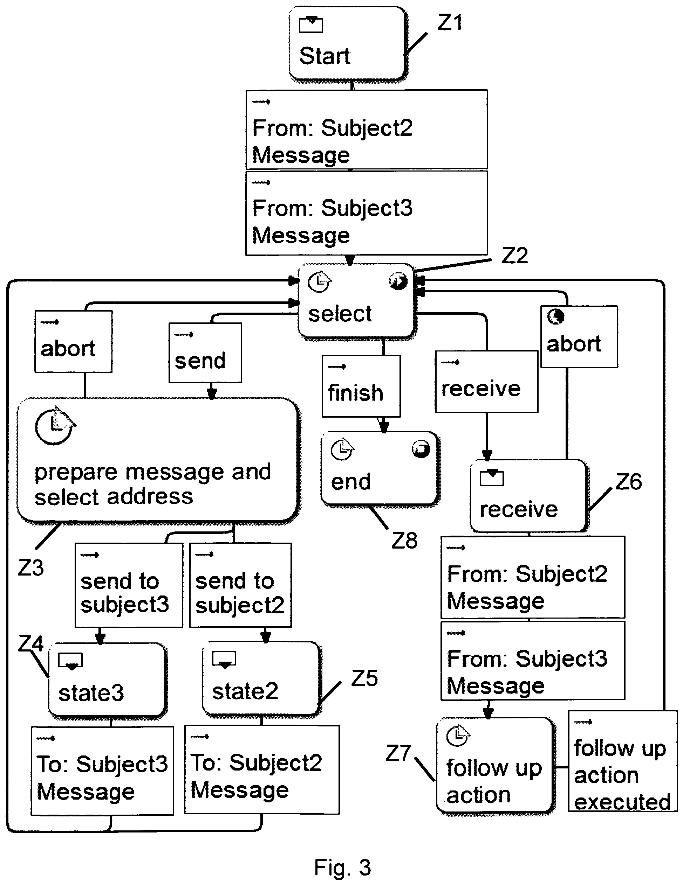

Das gesamte potenzielle Verhalten des Subject 1 ist nach Erzeugung des Clusters in Fig. 3 in einem Zustandsübergangsdiagramm dargestellt. Ein jedes Subjekt kann die Zustände **Start, Empfangen, Vorbereiten des Sendens, Senden, Ende und Select** einnehmen. Ein Start-Zustand (Zustand Z1) ist beim Subject 1 praktisch ohne Bedeutung, da das Subject 1 als Start-Subjekt im Prozessdiagramm nach Fig. 2 gekennzeichnet ist, und sich von Anfang an im Zustand "Select" (Zustand Z2) befindet. Im Zustand "Select" kann das Subjekt entscheiden, ob es Nachrichten empfangen oder senden möchte. Da das Subject 1 das Start-subjekt ist und es den Prozess mit dem Versenden einer Nachricht zu beginnen hat, muss in diesem Fall ein Senden einer Nachricht ausgeführt werden. Der Select-Zustand geht somit auf den Zustand "Vorbereitung einer Nachricht" und "Auswählen der Adresse" über. (Zustand Z3). Von diesem Zustand geht das Subject 1 entweder in den Sende-Zustand Z4 oder in den Sende-Zustand Z5 über, mit welchen jeweils eine Nachricht entweder an das Subject 3 oder an das Subject 2 gesendet wird. Danach geht der Zustand des Subject 1 wieder auf den Select-Zustand Z2 über. In diesem entscheidet das Subjekt, ob es Nachrichten empfangen oder senden soll. Wenn es Nachrichten empfangen soll, geht es auf den Empfangszustand Z6 über. In diesem Zustand verbleibt es bis es eine entsprechende Nachricht von Subject 2 oder von Subject 3 empfängt. Beim Empfangen der Nachricht geht dieses Subject 1 in dem TUN-Zustand Z7 über. In diesem TUN-Zustand führt das Subject 1 eine bestimmte Aktion aus. Die Aktion kann von dem Inhalt der empfangenen Nachricht abhängen. Sie kann jedoch auch von der Nachricht unabhängig sein. Danach geht der Zustand des Subject 1 wieder in den Select-Zustand Z1 über, in dem es entscheidet, ob es Nachrichten empfangen oder senden soll oder ob es in den Endzustand übergehen soll. Beim Übergang in den Endzustand Z8 ist der Prozess für dieses Subject 1 beendet.

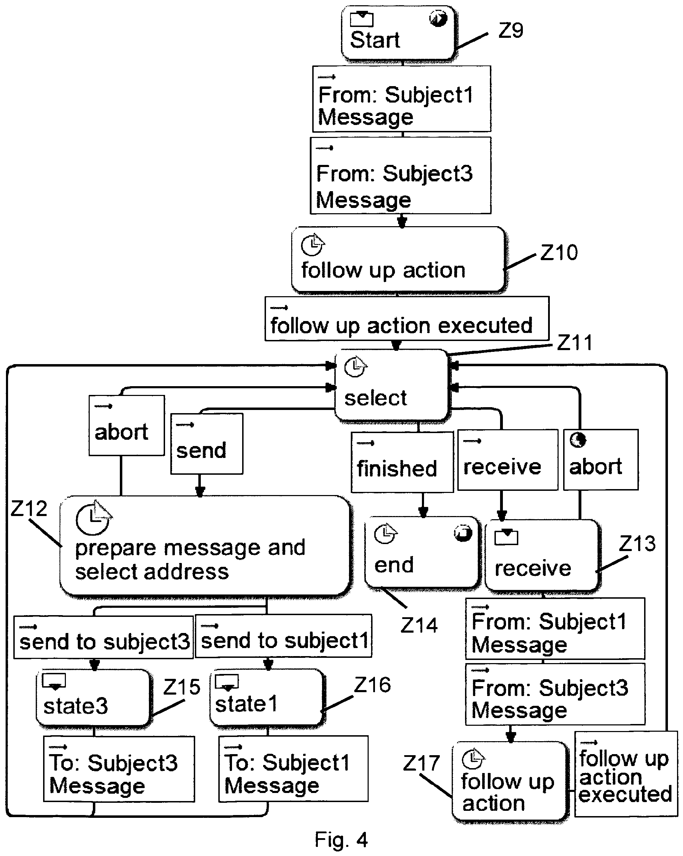

Fig. 4 das Zustandsübergangsdiagramm des Subjects 2 unmittelbar nach Erzeugung des in Fig. 2 gezeigten Clusters. Das Subject 2 beginnt mit einem Start-Zustand Z9, in dem es zunächst auf den Empfang einer Nachricht von Subject 1 oder von Subject 2 wartet. Beim Empfangen der Nachricht geht das Subject 2 in einen TUN-Zustand Z10 über, in dem es eine Aktion ausführt. Die Aktion kann in Abhängigkeit von in der Nachricht enthaltener Parameter oder auch unabhängig davon ausgeführt werden. Nach dem Ausführen dieser Aktion geht der Zustand des Subjects 2 in den Select-Zustand Z11 über. Im Select-Zustand Z11 kann das Subject 2 entscheiden, ob es eine Nachricht senden soll, oder ob es eine Nachricht empfangen soll oder ob der Prozess für das Subject 2 beendet ist. In Abhängigkeit von dieser Entscheidung geht der Zustand des Subjects 2 entweder in einen Vorbereiten-Senden-Zustand Z12, in einen Empfangs-Zustand Z13 oder in einen End-Zustand Z14 über. Im Vorbereiten-Senden-Zustand Z12 wird eine Nachricht vorbereitet und die Empfangsadresse ausgewählt. In Abhängigkeit von der Empfangsadresse geht der Zustand des Subjects 2 in den Sende-Zustand Z15 oder in den Sende-Zustand Z16 über, in welchen jeweils eine Nachricht entweder an das Subject 3 oder an das Subject 1 gesendet wird.

Befindet sich das Subject 2 im Empfangs-Zustand Z13, dann kann es eine Nachricht vom Subject 1 oder vom Subject 3 empfangen. In Abhängigkeit vom Inhalt der empfangenen Nachricht oder auch unabhängig davon geht nach dem Empfangen einer Nachricht der Zustand des Subjects 2 in den TUN-Zustand Z17 über, in dem eine Aktion ausgeführt wird. Nach dem Senden der Nachrichten in den Zuständen Z15 und Z16 bzw. nach dem Ausführen der Aktion im Zustand Z17 geht der Zustand des Subjects 2 wieder auf den Select-Zustand Z11 über, in welchem von Neuem entscheiden werden kann, ob eine Nachricht versendet, eine Nachricht empfangen oder der Prozess beendet werden soll.

Mit dem Erzeugen des Clusters werden automatisch in der Prozessbeschreibung in der Metasprache in einzelnen Subjekten die Befehle erzeugt, die zum Übergang zwischen einzelnen Zuständen führen. Diese Befehle sind grundsätzlich "Senden", "Empfangen" und "TUN". Es gibt nur diese drei Klassen von Befehlen. Der Befehl "Senden" enthält zwei Prozessschritte, nämlich das Vorbereiten einer Nachricht und Auswählen der Adresse und das Senden.

In dem Vorbereiten-Senden-Zustand Z3 bzw. Z12 und im Empfangs-Zustand Z6 bzw. Z13 kann der Prozess auch abgebrochen werden ("abort"), so dass ohne vollständige Ausführung des entsprechenden Befehls der Zustand des jeweiligen Subjektes wieder auf den Select-Zustand Z1 bzw. Z11 übergeht. Dies ist vor allem dann der Fall, wenn innerhalb eines vorbestimmten Zeitintervalls nicht die gewünschte Nachricht erhalten wird oder wenn die notwendigen Informationen zum Vorbereiten einer Nachricht vorhanden sind.

Fig. 5 zeigt die Struktur der Nachrichten gemäß dem vorliegenden Ausführungsbeispiel. Im vorliegenden Ausführungsbeispiel enthält die Nachricht 5 Datenfelder mit den Inhalten "Subject 1", "Keyword 1", "Keyword 2", "Content" und "Signature". Der Typ dieser Nachrichten ist jeweils ein String. Der Inhalt der Nachrichten kann verändert werden. Es ist sowohl möglich den Typ der Nachricht zu verändern. Alternative Typen sind Datum, Integer-Zahlen, Gleit-Komma-Zahlen, etc.. Die Struktur der Nachricht kann vom Benutzer gleichzeitig mit dem Ändern des Namens der Nachricht geändert werden. Mit Änderung der Struktur der Nachricht werden entsprechende Datenfelder in den Subjekten, die die Nachricht senden bzw. empfangen, automatisch angelegt, um den Inhalt der zu sendenden bzw. der zu empfangenden Nachricht speichern zu können.

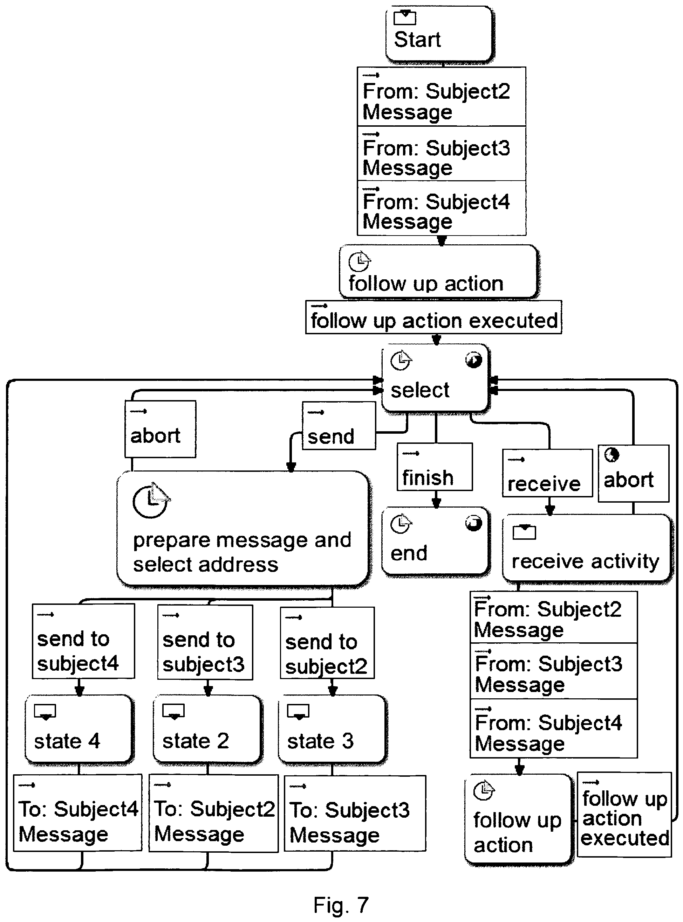

Fig. 6 zeigt das Prozessdiagramm eines Clusters mit vier Subjekten und Fig. 7 das Zustandsübergangsdiagramm des Subjects 1 aus Fig. 6. Dieses Zustandsübergangsdiagramm entspricht im Wesentlichen dem Zustandsübergangsdiagramm aus Fig. 3, wobei aufgrund der größeren Anzahl von Subjekten die Nachrichten jeweils an mehr Subjekte gesendet werden können bzw. von mehreren Subjekten die Nachrichten empfangen werden können.

Die Modellierung eines Prozesses wird nachfolgend anhand eines **Beispiels** zum Beantragen einer Urlaubsbewilligung in einem Unternehmen erläutert. Die Mitarbeiter Max Mustermann, Tobias Heinzinger, Uwe Hoffmann und Johannes Luther haben Anspruch auf Urlaub und können diesen bei ihrem Vorgesetzten beantragen. Der Vorgesetzte heißt Nils Meier. Nach Genehmigung des Antrages muss er dies mit der im Unternehmen für das Personal verantwortlichen Person, Frau Elisabeth Schwarzmeier abstimmen, damit diese die gewährten Urlaubstage korrekt erfassen kann.

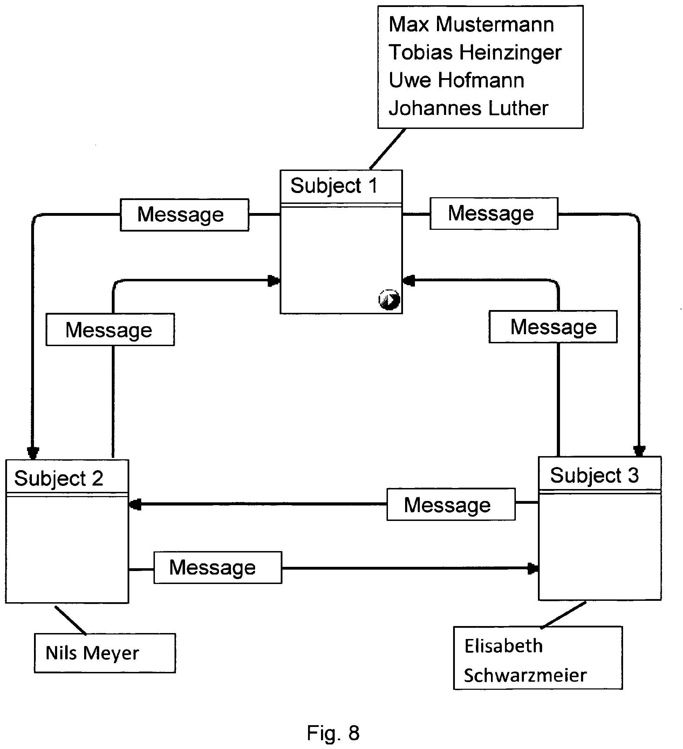

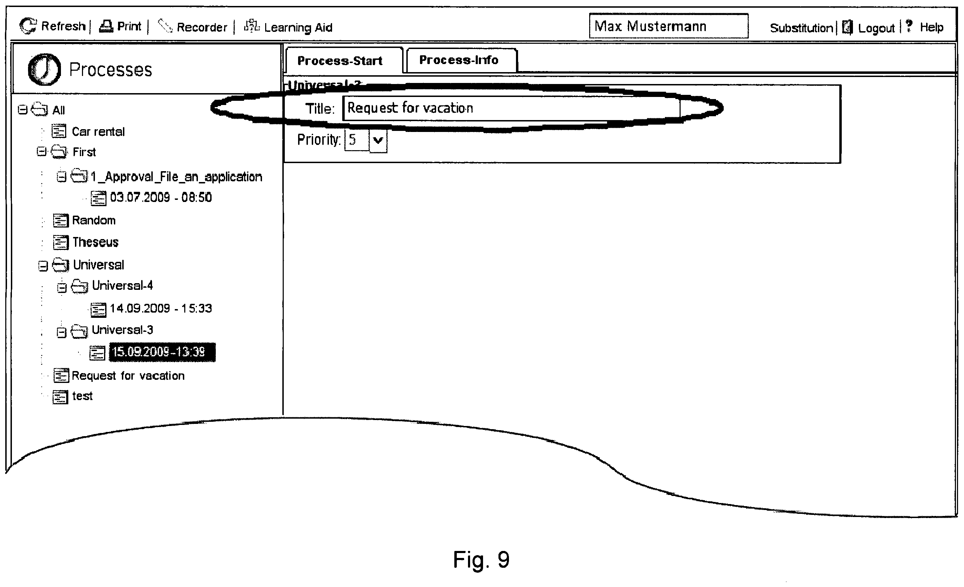

Grundsätzlich könnte für eine jede Person ein separates Subjekt erzeugt werden. Ein Subjekt bedeutet jedoch nicht notwendigerweise eine bestimmte Person. Auf ein Subjekt kann eine natürliche Person, kann eine Abteilung, kann eine Gruppe von Personen oder kann auch eine Maschine oder eine andere beliebige Ressource abgebildet werden, welche in beliebiger Art und Weise eine Nachricht, einen Gegenstand, eine Ware, Geldwerte oder dergleichen mit jemand anderen austauschen. Im vorliegenden Fall ist es deshalb zweckmäßig, die Gruppe der Mitarbeiter einem einzigen Subjekt zuzuordnen. Da Herr Nils Meier in seiner Funktion als Vorgesetzter die Urlaubsanträge zu gewähren hat, wird er einem weiteren Subjekt zugeordnet. Frau Elisabeth Schwarzmeier hat einen gewährten Urlaubsantrag zu bearbeiten, und muss dies unabhängig von Herrn Nils Meier ausführen, weshalb auch sie einem separaten Subjekt zugeordnet wird. Dieser Antrag auf Urlaubsbewilligung wird somit mit einem Cluster mit drei Subjekten simuliert (Fig. 8). Der Benutzer des Systems legt somit zunächst ein Cluster mit drei Subjekten an, das vom System dem Default-Namen "Universal-3" erhält. Mit dem Prozessmanager und/oder dem Workflow-Manager kann er diesem Cluster den Titel "Request for Vacation" zuordnen (Fig. 9).

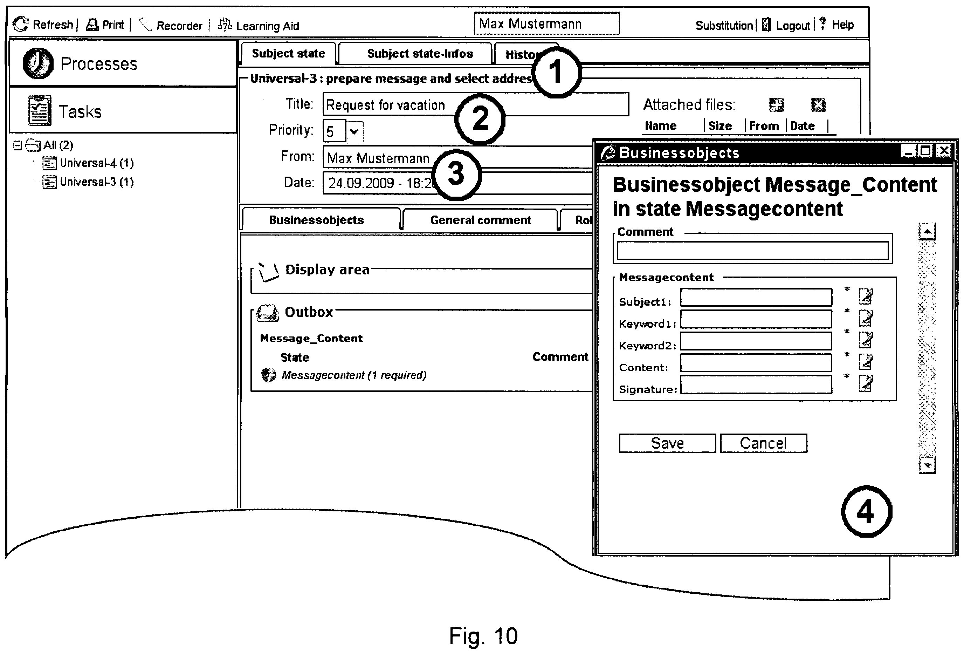

Fig. 10 zeigt die grafische Benutzerschnittstelle (GUI) des den Benutzer unterstützenden Workflow-Managers, der Bestandteil des Prozessmanagers ist. Mit diesem wird der Benutzer durch die einzelnen Zustände, wie sie oben anhand von Fig. 3 und 4 beschrieben sind, durch den Arbeitsablauf (Workflow) entsprechend der Zustandsübergangsdiagramme (Fig. 3, 4) geführt.

Fig. 10 zeigt bei:
- Nr. 1 die Bezeichnung des aktuellen Zustandes: "Prepare Message and Select Receiver"
- Nr. 2 die Bezeichnung des Clusters: "Request for Vacation"
- Nr. 3 den Benutzer des Systems beim Erstellen des Clusters: "Max Mustermann" und das Erstellungsdatum des Clusters: "24.09.2009-18:23",
- Nr. 4 ein Formular, das die Nachrichtenstruktur zeigt, die vom Benutzer ausgefüllt bzw. geändert werden kann.

In der graphischen Benutzeroberfläche des Workflow-Managers ist auch die Bezeichnung des Subjektes angegeben, wobei dies in dem in Fig. 10 gezeigten Screenshot nicht sichtbar ist.

Der Benutzer kann mit dem Workflow-Manager die von den einzelnen Zuständen zu sendenden bzw. zu empfangenden Nachrichten definieren.

Neben dem Workflow-Manager gibt es noch den Prozess-Manager, mit dem der Benutzer unmittelbar im Prozessdiagramm Nachrichten löschen, Nachrichten umbenennen, Subjekte umbenennen und ein Subjekt als Start-Subjekt festlegen kann. Der Benutzer kann Änderungen sowohl im Prozessmanager als auch im Workflow-Manager vornehmen, wobei er an keine Reihenfolge gebunden ist, um den Prozess zunächst im Prozessmanager und dann im Workflow-Manager, oder umgekehrt, zu bearbeiten. Er kann den Prozess auch abwechselnd im Prozess-Manager und Workflow-Manager bearbeiten. Der Workflow-Manager kann auch bei Bedarf den Prozessmanager und/oder den Subjektmanager aufrufen.

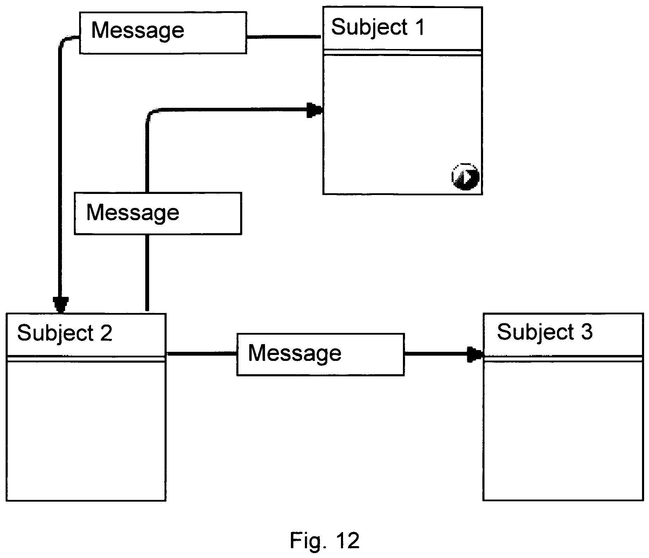

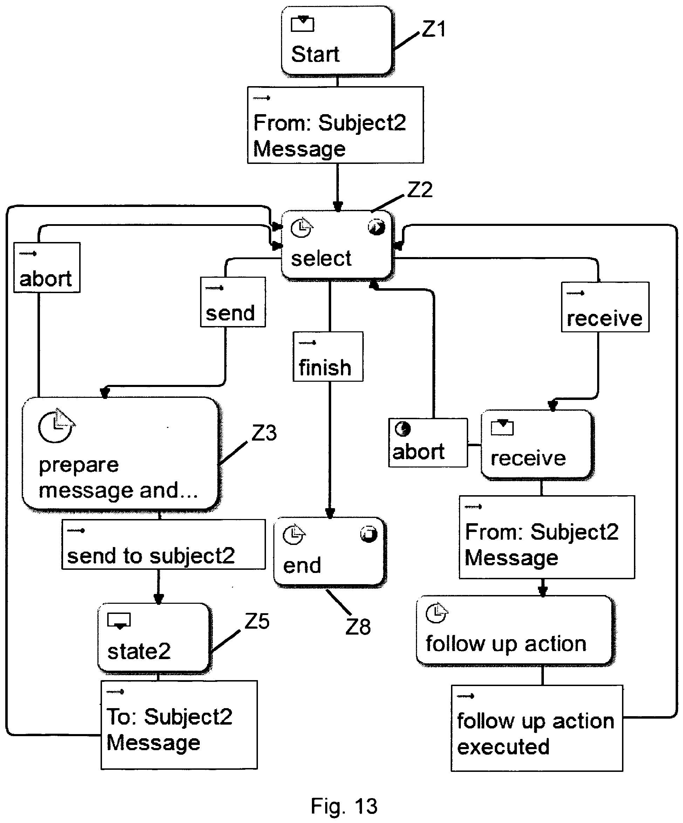

Der Benutzer des Systems weiß, dass die Mitarbeiter beim Vorgesetzten den Urlaub zu beantragen haben und dieser einen bewilligten Urlaubsantrag der Personalverantwortlichen mitzuteilen hat. Deshalb kommen nur Kommunikationsbeziehungen zwischen den Mitarbeitern und dem Vorgesetzten und eine Nachricht vom Vorgesetzten zur Personalverantwortlichen in Betracht. Dementsprechend können die anderen Nachrichten im Prozessdiagramm gelöscht werden. Ein entsprechend überarbeitetes Prozessdiagramm ist in Fig. 12 gezeigt. Fig. 13 zeigt das Zustandsübergangsdiagramm von Subject 1 nach dem Löschen der einzelnen Nachrichten gemäß Fig. 12. Diese Zustandsübergangsdiagramm entspricht im Wesentlichen dem Zustandsübergangsdiagramm aus Fig. 3, weshalb die gleichen Zustände mit den gleichen Bezugszeichen bezeichnet sind. Es fehlt jedoch der Zustand Z4, da das Subject 1 für eine Nachricht an das Subject 3 senden soll und der Empfangszustand Z6 ist lediglich zum Empfangen von Nachrichten vom Subject 2 und nicht vom Subject 3 ausgebildet.

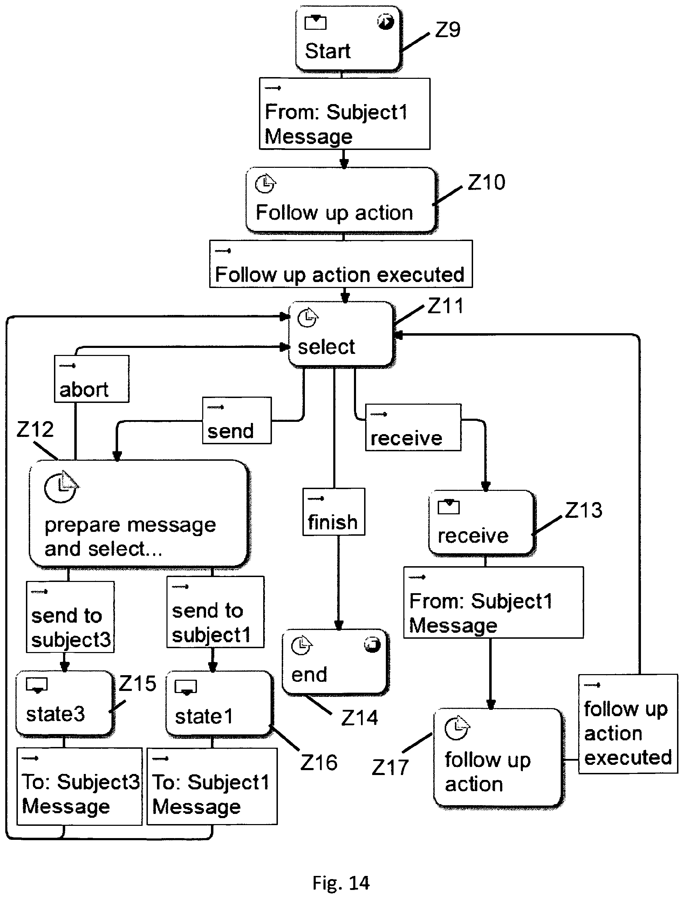

Fig. 14 zeigt das Zustandsübergangsdiagramm des Subjects 2, das im Wesentlichen dem Zustandsübergangsdiagramm aus Fig. 4 entspricht, weshalb wieder gleiche Zustände mit den gleichen Bezugszeichen bezeichnet sind.

Es fehlt der Zustand Z10. Der Zustand Z13 ist zum Empfangen von einer Nachricht von lediglich dem Subject 1, aber nicht vom Subject 2 ausgebildet.

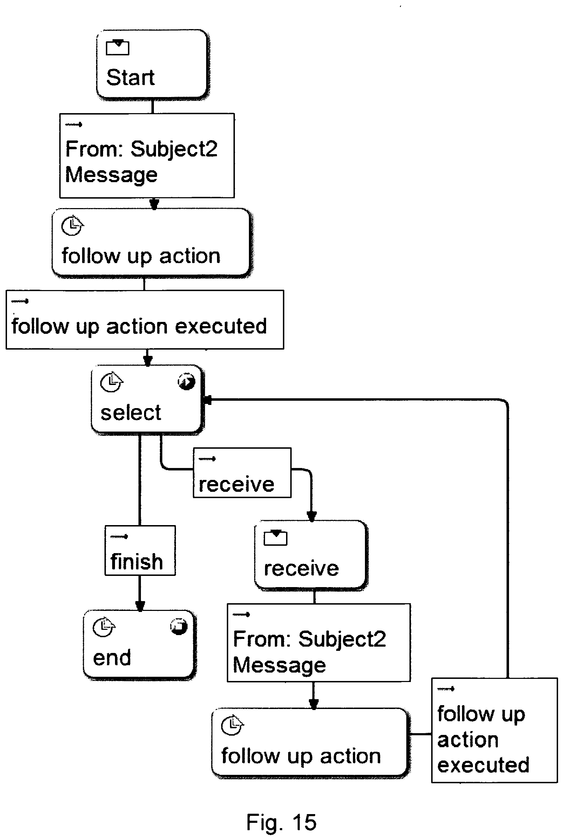

Fig. 15 zeigt das Zustandsübergangsdiagramm des Subjektes 3, das lediglich zum Empfangen einer Nachricht vom Subject 2 ausgebildet ist.

Das Löschen der einzelnen Nachrichten verändert somit das Verhalten der einzelnen Subjekte. Durch das Löschen der Nachrichten im Prozessdiagramm wird automatisch in der Beschreibung des Prozesses in der Metasprache die entsprechenden Befehle gelöscht bzw. spezifiziert, so dass sie zum Beispiel Nachrichten bloß von einem bestimmten Subjekt oder von einer bestimmten eingeschränkten Gruppe von Subjekten empfangen dürfen. Das Löschen der einzelnen Nachrichtenverbindungen bedeutet damit nicht nur das Löschen dieser Nachrichtenverbindungen in dem Prozessdiagramm, sondern auch das Ändern der Befehle in den Subjekten in der Prozessbeschreibung in der Metasprache.

Der Benutzer kann im Prozess-Manager die Vorgabe-Namen der Subjekte durch sprechende Namen ersetzen. Im vorliegenden Ausführungsbeispiel hat er "Subject 1" durch "Employee", "Subject 2" durch "Manager" und "Subject 3" durch "Human Ressource" ersetzt.

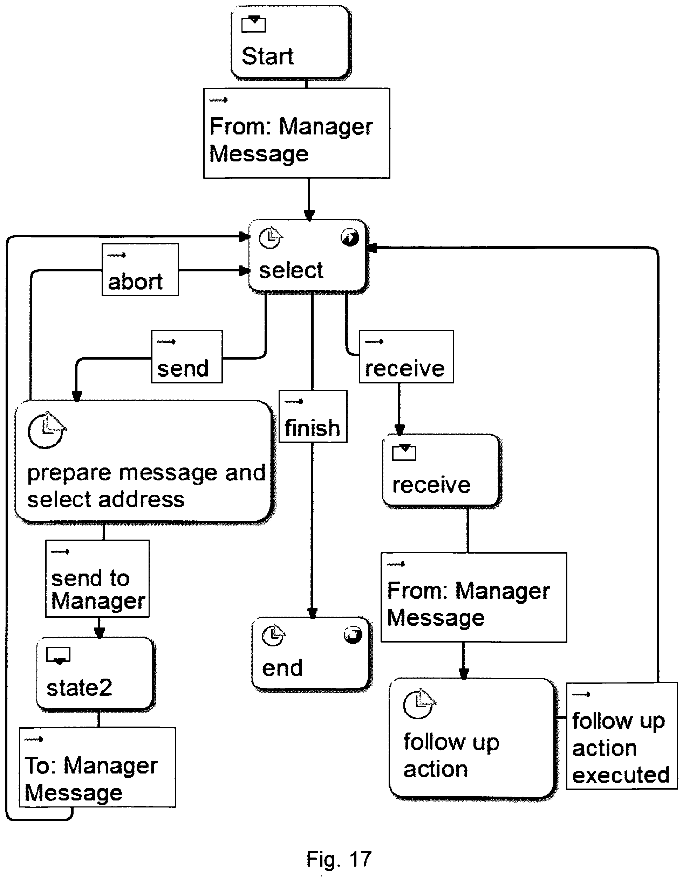

Diese Änderung ist im Prozessübergangsdiagramm des Subjektes Employee, das ursprünglich Subject 1 war, dargestellt (Fig. 17). Als Quelle bzw. Empfänger sind jeweils sprechenden Namen eingetragen. Dementsprechend sind auch in den Befehlen der Subjekte in der Prozessbeschreibung diese sprechenden Namen eingesetzt.

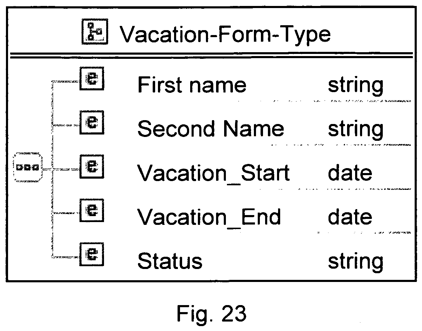

Die einzelnen Nachrichten können bearbeitet werden. Hierbei werden vor allem den einzelnen Nachrichten sprechende Namen zugeordnet. Die Nachricht vom Subjekt Employee zum Subjekt Manager wird als "Application for Vacation" bezeichnet. Die Struktur dieser Nachricht wurde vom Benutzer angepasst (Fig. 23), wobei sie nun die Felder "First_Name", "Second_Name", "Vacation_Start", "Vacation_End" und "Vacation_Status" enthält. Die Felder "Vacation_Start" und "Vacation_End" sind Datumsangaben. Die übrigen Felder sind Strings. Diese Nachricht ist von dem entsprechenden Mitarbeiter gemäß seinen Urlaubswünschen auszufüllen und an seinen Vorgesetzten zu schicken, der durch das Subjekt "Manager" simuliert wird. Die Nachricht vom "Manager" zum "Employee" wird in zwei Nachrichten aufgespaltet, die mit "accepted" bzw. "denied" bezeichnet werden. Diese Nachrichten weisen den gleichen Inhalt wie die Nachricht "Vacation_Application" auf, wobei lediglich deren Bezeichnung "accepted" oder "denied" lautet.

Die Nachricht vom Subjekt "Manager" zum Subjekt "Human Ressource" wird als "Vacation Accepted" umbenannt. Der Inhalt der Nachricht ist der gleiche wie der der Nachricht "Application for Vacation". Diese Nachricht hat lediglich eine andere Bezeichnung.

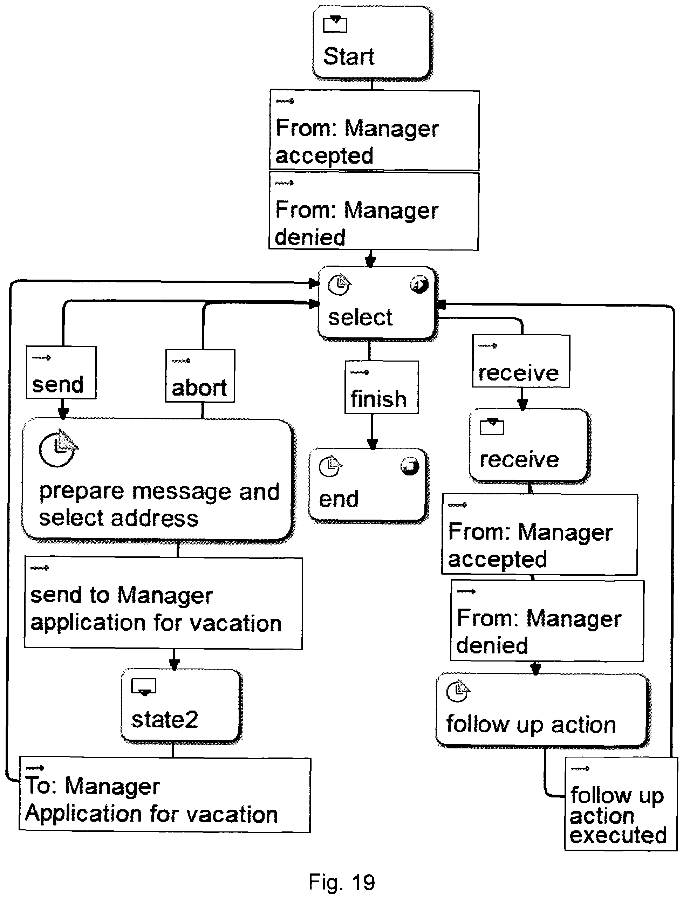

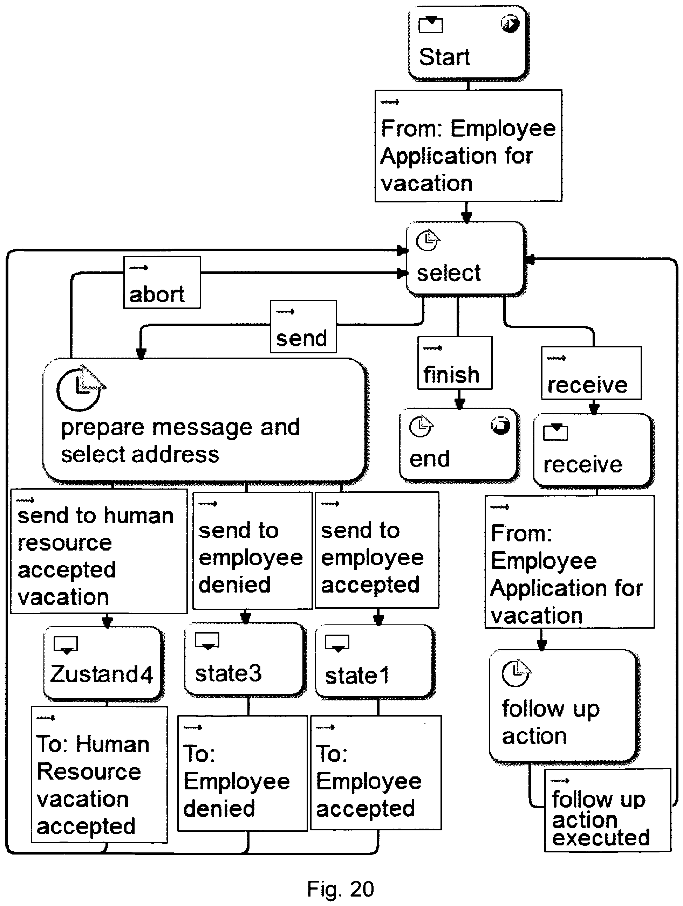

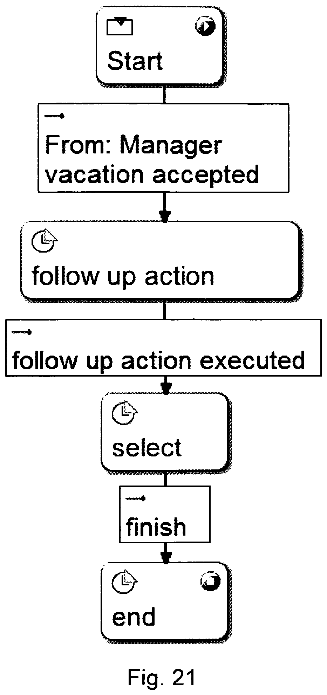

Durch die Änderung der Nachrichten ergibt sich das in Fig. 19 anhand eines Übergangsdiagrammes dargestellte Verhalten für das Subjekt "Employee", das in Fig. 20 anhand eines Übergangsdiagrammes gezeigte Verhalten für das Subjekt "Manager" und das in Fig. 21 durch ein Übergangsdiagramm dargestellte Verhalten für das Subjekt "Human Ressource".

Anhand von Fig. 20 kann man erkennen, dass das Subjekt "Manager" drei Nachrichten senden kann und zwar an das Subjekt "Employee" eine Nachricht "denied" oder eine Nachricht "accepted" und an das Subjekt "Human Ressource" eine Nachricht "vacation accepted". Diese drei Nachrichten sind zunächst Zustandsübergangsdiagramm völlig gleichberechtigt nebeneinander angeordnet.

Mit dem Subjekt-Manager kann das Subjekt "Manager" weitergehend präzisiert werden. Im vorliegenden Ausführungsbeispiel wird ein Befehl für eine Entscheidung eingefügt, so dass sich das Subjekt "Manager" zu entscheiden hat, ob es den Urlaubsantrag bewilligt oder ob es ihn nicht bewilligt. Hierdurch wird der Verfahrensablauf verzweigt, wobei in dem einen Zweig die Ablehnungsnachricht "denied" an das Subjekt "Employee" gesendet wird, und im anderen Zweig zunächst die Bewilligungsnachricht "accepted" an das Subject "Employee" gesendet wird und danach an das Subjekt "Human Ressource" die Nachricht gesendet worden ist, dass ein Urlaubsantrag akzeptiert worden ist (Nachricht: "accepted vacation application").

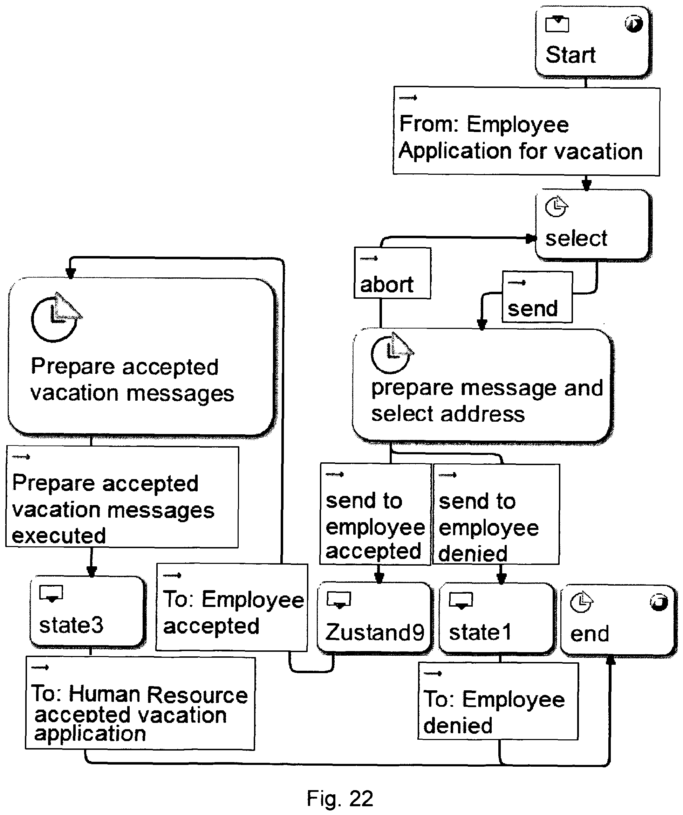

Fig. 22 zeigt das Zustandsübergangsdiagramm nach Einfügen der Entscheidung mittels des Subjekt-Managers in das Subjekt "Manager". Zum Durchführen dieser Entscheidung während der Simulation kann entweder an einer bestimmten Stelle im Computernetzwerk ein Nutzer mit einer entsprechenden Eingabeaufforderung gefragt werden, wie im konkreten Fall zu entscheiden ist, oder die Entscheidung kann auch automatisch anhand vorbestimmter Parameter, die den im Unternehmen geltenden Regeln entsprechen, erfolgen. Hat das Unternehmen beispielsweise bereits definierte Regeln, wie zum Beispiel, dass bestimmte Mitarbeiter nicht gleichzeitig Urlaub nehmen dürfen, dass an bestimmten Tagen oder Wochen kein Urlaub genommen werden darf, dass der Urlaub eine bestimmte Mindestdauer betragen muss oder nicht länger als eine vorbestimmte Maximaldauer betragen darf, dann kann auch automatisch geprüft werden, ob der Urlaubsantrag den Vorgaben entspricht. Sind diese Vorgaben bereits in einem Computerprogramm definiert, dann können sie als ein Refinement in ein Subjekt integriert werden. Hierzu werden unterschiedliche Schnittstellen (z.B. ASCII-Text) zu Verfügung gestellt, die von dem Benutzer des Systems eingepflegt werden können, um das Refinement an den Prozess zu koppeln. Mit diesen Schnittstellen können Daten an das Refinement übergeben und Daten vom Refinement übernommen werden. Wird diese Entscheidung nicht näher durch Regeln definiert oder durch ein Refinement präzisiert, dann wird beim Einfügen einer Entscheidung automatisch eine Eingabeaufforderung an den Benutzer erzeugt, die beim Ausführen des Prozesses die entsprechende Eingabe für die Entscheidung abfrägt.

Der Prozessgenerator ist derart ausgebildet, dass der Benutzer des Systems lediglich im Prozess-Manager, Workflow-Manager und Subjekt-Manager Änderungen und Ergänzungen am Prozessdiagramm bzw. an einzelnen Subjekten ausführen kann. Der Benutzer schreibt keinerlei Computercode. Am Ende der Modellierung des Prozesses anhand des Prozessdiagrammes erfolgt eine Speicherung, wobei eine Prozessbeschreibung in der Metasprache in eine Prozessdatei gespeichert wird.

Diese Prozessbeschreibung in der Metasprache wird vom Quellcodegenerator automatisch in einen Quellcode umgesetzt. Dieser Quellcode kann entweder direkt mittels eines Interpreters ausgeführt werden oder mittels eines Compilers in einen ausführbaren Maschinencode umgesetzt werden.

Der Quellcodegenerator kann bei Verwendung eines Interpreters auch in den Prozess-Generator integriert werden, wobei die Prozessbeschreibung in der Metasprache so weit für den Interpreter präzisiert wird, dass sie unmittelbar durch den Interpreter ausführbar ist. Es wird jedoch die Ausführungsform mit separatem Quellcodegenerator bevorzugt, wobei vorzugsweise für einen jeden Cluster ein separater Quellcode erzeugt wird. Hierdurch können unterschiedliche Cluster auf unterschiedlichen Computern zur Ausführung gebracht werden, wobei die Computer über ein Datennetzwerk miteinander verbunden sind, so dass Subjekte der unterschiedlichen Cluster miteinander Nachrichten austauschen können.

Vorzugsweise wird auch für ein jedes Cluster eine separate Prozessdatei erzeugt. Die Prozessdatei enthält einen Namen, der vom Namen des Clusters abgeleitet ist. Die Prozessdatei kann auch Angaben zu dem Computer enthalten, an dem das Cluster zur Ausführung gebracht werden soll, mit statischer oder dynamischer IP-Adresse, gegebenenfalls die IP-Adresse eines Servers, optionalen Angaben, wie den Namen des Entwicklers und der Version. Es kann auch zweckmäßig sein, interne und externe Subjekte vorzusehen, wobei interne Subjekte lediglich mit weiteren Subjekten innerhalb des Clusters kommunizieren können und externe Subjekte mit anderen externen Subjekten anderer Cluster kommunizieren können. Die externen Subjekte können somit Befehle zum externen Austausch von Nachrichten, d.h. über die Grenzen der Cluster hinweg, enthalten. Selbstverständlich können die externen Subjekte auch mit den internen Subjekten des eigenen Clusters kommunizieren.

Ein Prozess kann somit modular aus vielen Clustern erzeugt werden. Einzelne Cluster können auch innerhalb eines Prozesses einfach ausgetauscht werden. Mit dem Prozess-Manager können der Austausch von Nachrichten zwischen den Subjekten unterschiedlicher Cluster festgelegt werden. Hierdurch werden unterschiedliche Cluster miteinander verbunden. Die einzelnen Cluster können mit dem erfindungsgemäßen System und dem erfindungsgemäßen Verfahren sehr schnell, einfach und zuverlässig erzeugt werden, wobei zunächst ein an sich vollständiger Universalprozess eines Clusters mit einer vorbestimmten Anzahl von Subjekten automatisch erzeugt wird, der durch Reduzierung der Nachrichten und ggfs. Beschränkung der Quellen, der Nachrichteninhalte, der Datenmenge oder dergleichen weiter präzisiert werden. Weiterhin können zum Empfangen von Nachrichten durch Subjekte Eingabepuffer, die auch als Input-Pools bezeichnet werden, vorgesehen sein, wie sie bereits aus der US 7,861,221 bekannt sind. Diese Input-Pools bzw. Eingabepuffer können in ihrer Empfangskapazität eingestellt werden. Der Vorgabewert beträgt in der Regel 1000 Nachrichten. Weiterhin können zusätzliche Input-Pool-Restriktionen festgelegt werden, wie zum Beispiel, dass für bestimmte Sender bzw. bestimmte Nachrichtentypen vorbestimmte Empfangskapazitäten reserviert werden. Hierdurch wird für einen jeden Sender bzw. einen jeden Nachrichtentyp eine separate Empfangskapazität im Input-Pool reserviert. Diese Empfangskapazitäten bilden somit voneinander unabhängige Partitionen des Input-Pools. Dadurch ist sichergestellt, dass ein bestimmter Sender den Input-Pool nicht alleine vollständig füllen kann, sondern für bestimmte Sender bzw. bestimmte Nachrichtentypen eine vorbestimmte Partition unabhängig vom Nachrichtenaufkommen anderer Sender zur Verfügung steht.

Das Empfangen von Nachrichten wird mittels eines nicht-aktiven Wartens auf die entsprechende Nachricht ausgeführt. Das nicht-aktive Warten beruht auf dem so genannten Monitor-Konzept, das bereits im Oktober 1974 von Hoare C. A. R. in dem Artikel "Monitors: An operating system structuring concept" in Commun. ACM 17, 10 beschrieben ist. Vereinfacht kann dieses Monitor-Konzept als eine Verschiebung der Warte-Funktion von einer Programmebene in die Betriebssystemebene bzw. Prozess-Ebene dargestellt werden. Wesentlich ist, dass durch dieses Monitor-Konzept verhindert wird, dass eine Vielzahl von Tasks in einem Multitask-System gleichzeitig aktiv sind und immer wieder Prozessorleistungen zum Ausführen des Wartens beanspruchen. Durch dieses Monitor-Konzept wird das Warten von einer Vielzahl von Tasks von lediglich einer einzigen Betriebssystem-Task überwacht. Dieses Monitor-Konzept erlaubt auf einfache Art und Weise, dass eine Vielzahl von Programmen bzw. Tasks parallel nebeneinander ablaufen und auf Daten von einer jeweils anderen Task bzw. einem jeweils anderen Programm warten, ohne dass hierdurch die Prozessorleistung nennenswert beeinträchtigt wird. In JAVA ist das Monitor-Konzept durch die Methoden "Notify", "NotifyAll" und "Wait" implementiert.

Der Quellcode wird in der vorliegenden Erfindung so wie in der US 7,861, 221 aus der Prozessdatei erzeugt, wobei sich die vorliegende Erfindung von diesem bekannten Verfahren jedoch dadurch unterscheidet, dass nicht für ein jedes Subjekt ein separater Quellcode erzeugt wird, sondern dass für ein jedes Cluster, das ein oder mehrere Subjekte umfasst, jeweils ein separater Quellcode erzeugt wird. Vorzugsweise wird für ein jedes Cluster eine JA-VA^{®}-Klasse angelegt. Dieser JAVA^{®}-Klasse werden Methoden einer vorprogrammierten Standardklasse vererbt, die durch eine Reihe von Methoden ergänzt ist. Eine entsprechende Quellcodedatei wird initialisiert, d.h., dass eine Methode zur Initialisierung der Klasse in den Quellcode geschrieben wird. Diese Methode wird eine JAVA^{®} als Konstruktor bezeichnet. In diesem Konstruktor werden der Prozessdatei-Name und eine Cluster-ID eingetragen. In den Quellcode wird die eine JAVA^{®}-Methode "Main" eingetragen. In dieser Main-Methode ist ein Aufruf einer Run-Methode enthalten, die von einer vorprogrammierten Standardklasse ererbt worden ist. Optional können auch Methodenaufrufe für Refinement-Funktionen im Quellcode eingetragen werden.

Dieser Quellcode kann dann entweder von einem Interpreter interpretiert oder von einem Compiler kompiliert werden.

### Bezugszeichenliste

- 1: Computersystem
- 2: Eingabeeinrichtung
- 3: Ausgabeeinrichtung
- 4: JAVA^{®}-Plattform
- 5: Quellcode-Generator
- 6: Prozess-Generator
- 7: Quellcode
- 8: Prozess-Manager
- 9: Subjekt-Manager
- 10: Subjekt
- 11: Nachricht
- 12: Kästchen
- 13: Kopfzeile
- 14: Startdreieck

## Patentansprüche

1. System zum Erzeugen eines Quellcodes für ein Computerprogramm zur Ausführung bzw. Simulation eines Prozesses aus einer vom Quellcode (7) unabhängigen Prozessbeschreibung, wobei das System einen Computer (1) mit einer Ausgabeeinrichtung (3) und einer Eingabeeinrichtung (2) umfasst und einen Prozessgenerator (6) zur Erzeugung der Prozessbeschreibung und einer Prozessdatei und einen Quellcodegenerator (5) zur automatischen Erzeugung eines Quellcodes (7) aus der Prozessdatei aufweist, wobei der Prozessgenerator (6) und der Quellcodegenerator (5) auf dem Computer gespeicherte und ausführbare Software-Module sind und der Prozessgenerator (6) einen Prozessmanager (8) aufweist und der Prozessmanager (8) zum Beschreiben eines Prozesses und zum Darstellen eines grafischen Prozessdiagrammes auf der Ausgabeeinrichtung (3) ausgebildet ist, wobei er aus der in einer Metasprache ausgeführten Prozessbeschreibung die grafische Darstellung des Prozessdiagrammes generiert und mit folgenden Funktionen ausgebildet ist:
• Funktion zum Erzeugen eines Clusters mit einer vorbestimmten Anzahl von Subjekten (10), wobei diese Funktion derart ausgebildet ist, dass jeweils zwei Nachrichten (11) zwischen allen Paaren von Subjekten (10) des Clusters automatisch erzeugt werden, wobei ein jedes Subjekt (10) eine der beiden Nachrichten (11) des jeweiligen Paares sendet und die andere Nachricht (11) empfängt,
• Funktion zum Löschen einzelner automatisch erzeugter Nachrichten (11),
• Funktion zum Erzeugen einzelner Nachrichten (11) zwischen einem der Subjekte (10) des bestimmten Clusters und einem Subjekt (10), das nicht Bestandteil dieses einen bestimmten Clusters ist,
• Funktion zum Speichern der den bzw. die Cluster enthaltenden Prozessbeschreibung in die Prozessdatei, wobei die Prozessbeschreibung in der Metasprache in der Prozessdatei gespeichert wird, und in der Metasprache die Subjekte (10) definiert sind und die Subjekte (10) Befehle zum Senden und/oder Empfangen von Nachrichten (11) enthalten.

2. System nach Anspruch 1,
**dadurch gekennzeichnet,**
**dass** der Prozessmanager (8) eine oder mehrere der folgenden Funktionen aufweist:
• Funktion zum Verändern des Namens der einzelnen Nachrichten (11), wobei beim Ausführen dieser Funktion automatisch der geänderte Name der Nachricht (11) in die entsprechenden Befehle der Subjekte (10) zum Abarbeiten dieser Nachricht (11) eingetragen wird,
• Funktion zum Verändern des Namens eines Subjektes (10), wobei beim Ausführen dieser Funktion automatisch der geänderte Name des Subjektes (10) in die entsprechenden Befehle der Subjekte (10) eingetragen wird, die auf dieses Subjekt (10) referenzieren,
• Funktion zum Festlegen, welches Subjekt (10) als erstes eine Nachricht (11) sendet,
• Funktion zum Festlegen der Reihenfolge des Sendens der einzelnen Nachrichten (11), wobei in einzelnen Subjekten eine Verzweigung von Nachrichten-Flüssen auf Grundlage einer Entscheidung mit entsprechenden Bedingungen festgelegt werden kann.

3. System nach Anspruch 2,
**dadurch gekennzeichnet,**
**dass** die Funktion zum Verändern des Namens der einzelnen Nachrichten (11) derart ausgebildet ist, dass beim Ausführen dieser Funktion automatisch der geänderte Name der Nachricht (11) in die Befehle zum Senden und Empfangen von Nachrichten (11) eingetragen wird.

4. System nach einem der Ansprüch 1 bis 3,
**dadurch gekennzeichnet,**
**dass** der Prozessgenerator (6) einen Subjektmanager (9) zum Verändern des Verhaltens einzelner Subjekte (10) aufweist.

5. System nach Anspruch 4,
**dadurch gekennzeichnet,**
**dass** der Subjektmanager (9) eine oder mehrere der folgenden Funktionen aufweist:
• Funktion zum Beschränken des Inhalts einer zu empfangenden Nachricht (11),
• Funktion zum Beschränken der Menge der potentiellen Absender einer zu empfangenden Nachricht (11),
• Funktion zum Wiederholen bestimmter Befehle,
• Funktion zum Integrieren von einem Refinement in ein Subjekt (10),
• Funktion zum Ausgeben von Daten an einer Ausgabeeinrichtung,
• Funktion zum Einlesen von Daten an einer Eingabeeinrichtung,
• Funktion zum Ausführen einer Entscheidung in Abhängigkeit vorbestimmter Parameter,
• Funktion zum Beenden des Prozessablaufs.

6. System nach einem der Ansprüche 1 bis 5,
**dadurch gekennzeichnet,**
**dass** das System einen Workflow-Manager aufweist, der derart ausgebildet ist, dass er den Benutzer entlang aufeinanderfolgender Zustände der einzelnen Subjekte (10) führt, so dass der Benutzer durch Eingaben das Verhalten des entsprechenden Subjekts (10) verändern kann.

7. System nach einem der Ansprüche 1 bis 6,
**dadurch gekennzeichnet,**
**dass** dass System zumindest einen Computer mit einer Ausgabeeinrichtung (3) und einer Eingabeeinrichtung (2) umfasst und der Prozessgenerator (6) und der Quellcodegenerator (5) auf dem Computer gespeicherte und ausführbare Software-Module sind.

8. Verfahren zum Erzeugen eines Quellcodes für ein Computerprogramm zur Ausführung bzw. Simulation eines Prozesses, wobei ein System nach einem der Ansprüche 1 bis 7 verwendet wird, bei dem mehrere Subjekte (10) miteinander kommunizieren, umfassend folgende Schritte:
- Erzeugen einer Prozessbeschreibung, wobei zumindest ein bestimmtes Cluster mit einer vorbestimmten Anzahl von Subjekten (10) festgelegt wird, und zumindest ein weiteres Subjekt (10) definiert wird, das Bestandteil eines weiteren Clusters sein kann,
- automatisches Erzeugen jeweils zweier Nachrichten (11) zwischen allen Paaren von Subjekten (10) des Clusters, wobei ein jedes Subjekt (10) eine der beiden Nachrichten (11) des jeweiligen Paars sendet und die andere empfängt,
- Bereitstellen einer Funktion zum Löschen einzelner der automatisch erzeugten Nachrichten (11) und Anwenden der Funktion auf einzelne Nachrichten,
- Bereitstellen und Anwenden einer Funktion zum Erzeugen einzelner Nachrichten (11) zwischen einem der Subjekte (10) des bestimmten Clusters und dem Subjekt (10), das nicht Bestandteil dieses einen bestimmten Clusters ist,
- Speichern der Prozessbeschreibung mit den eingegebenen Definitionen in einer Prozessdatei,
- automatisches Erzeugen zumindest einer Quellcodedatei für ein Computerprogramm, das jeweils Befehle zum Austausch von Nachrichten zwischen den einzelnen Subjekten (10) enthält.

9. Verfahren nach Anspruch 8,
**dadurch gekennzeichnet,**
**dass** für ein jeden Cluster ein separater Quellcode (7) erzeugt wird.

## Claims

1. System for generating a source code for a computer programme in order to execute or simulate a process from a process description independent of the source code (7) wherein the system comprises a computer (1) with an output device (3) and an input device (2) and has a process generator (6) for creating the process description and a process file and a source code generator (5) for the automatic generation of a source code (7) from the process file, wherein the process generator (6) and the source code generator (5) are stored on the computer and are executable software modules and the process generator (6) has a process manager (8) and the process manager (8) is designed to describe a process and to present a graphic process diagram on the output device (3), wherein it generates the graphic illustration of the process diagram from the process description conducted in a metalanguage and is designed with the following functions:
• Function to generate a cluster with a predetermined number of subjects (10) wherein this function is designed such that, respectively, two messages (11) are generated automatically between all pairs of subjects (10) of the cluster, wherein one of each subject (10) transmits one of the two messages (11) of the particular pair and receives the other message (11),
• Function to delete single automatically generated messages (11),
• Function to generate individual messages (11) between one of the subjects (10) of the particular cluster and a subject (10) which is not a component of this one particular cluster,
• Function to store the process description containing the cluster(s) in the process file, wherein the process description is stored in metalanguage in the process file, the subjects (10) are defined in metalanguage and the subjects (10) contain commands for transmitting and/or receiving messages (11).

2. System according to claim 1, **characterised in that**
the process manager (8) has one or more of the following functions:
• Function to change the name the individual messages (11), wherein, when this function is run, the changed name of the message (11) is entered automatically into the corresponding commands of the subjects (10) to execute this message (11),
• Function to change the name of a subject (10), wherein, when this function is run, the changed name of the subject (10) is entered automatically into the corresponding commands of the subjects (10) which refer to this subject (10),
• Function to determine which subject (10) a message (11) sends firstly,
• Function to determine the sequence of sending the individual messages (11), wherein a branching of message flows in individual subjects can be established based on a decision with corresponding conditions.

3. System according to claim 2, **characterised in that**
the function to change the name of the individual messages (11) is designed such that, when executing this function automatically, the changed name of the message (11) is entered into the commands for sending and receiving messages (11).

4. System according to any one of claims 1 to 3, **characterised in that**
the process generator (6) has a subject manager (9) to change the behaviour of individual subjects (10).

5. System according to claim 4, **characterised in that**
the subject manager (9) has one or more of the following functions:
• Function to limit the content of a message (11) to be received,
• Function to limit the number of potential senders of a message (11) to be received
• Function to repeat certain commands,
• Function to integrate a refinement in a subject (10),
• Function to transmit data to an output device,
• Function read in data on an input device,
• Function to carry out a decision based on predetermined parameters,
• Function to end the process sequence.

6. System according to any one of claims 1 to 5, **characterised in that**
the system has a workflow manager which is designed such that it leads the user along sequential states of the individual subjects (10) so that the user can change the behaviour of the corresponding subject (10) by entries.

7. System according to any one of claims 1 to 6, **characterised in that**
the system comprises at least one computer with an output device (3) and an input device (2), and the process generator (6) and the source code generator (5) are stored on the computer and are executable software modules.

8. Method of creating a source code for a computer programme to executing or simulating a process, wherein a system according to any one of claims 1 to 7 is used in which several subjects (10) communicate with one another, comprising the following steps:
- creating a process description wherein at least a certain cluster with a predetermined number of subjects (10) is determined, and at least one further subject (10) is defined which can be a component part of a further cluster,
- automatic generation of two messages (11) respectively between all pairs of subjects (10) of the cluster, wherein one of each subject (10) sends one of the two messages (11) of the respective pair and the other receives,
- Provision of a function to automatically delete individual messages of the automatically generated messages (11) and to use the function for individual messages,
- Provision and use of a function to generate individual messages (11) between one of the subjects (10) of the specified cluster and the subject (10) which is not a component part of this one certain cluster,
- Storage of the process description with the input definitions in a process file,
- automatic generation of at least one source code file for a computer programme which respectively contains commands to exchange messages between the individual subjects (10).

9. Method according to claim 8, **characterised in that**
a separator source code (7) is generated for each cluster.

## Revendications

1. Système de génération d'un code source pour un programme informatique d'exécution ou de simulation d'un processus à partir d'une description de processus indépendante du code source (7), dans lequel le système comprend un ordinateur (1) avec un dispositif de sortie (3) et un dispositif d'entrée (2) et un générateur de processus (6) pour générer la description du procédé et un fichier de processus et un générateur de code source (5) pour générer automatiquement un code source (7) à partir du fichier de processus, dans lequel le générateur de processus (6) et le générateur de code source (5) sont des modules logiciels exécutables stockés sur l'ordinateur et le générateur de processus (6) comporte un gestionnaire de processus (8) et le gestionnaire de processus (8) est conçu pour décrire un processus et pour afficher un diagramme de processus graphique sur le dispositif de sortie (3), dans lequel il génère à partir de la description de processus exécutée dans un métalangage la représentation graphique du diagramme de processus et est configuré avec les fonctions suivantes:
• Fonction de génération d' une grappe d'un nombre prédéterminé de sujets (10), dans lequel cette fonction est conçue de manière telle que deux messages (11) soient générés automatiquement entre toutes les paires de sujets (10) de la grappe, dans lequel chaque sujet (10) envoie l'un des deux messages (11) de la paire respective et reçoit l'autre message (11),
• Fonction de suppression de messages (11) individuels générés automatiquement,
• Fonction de génération de messages (11) individuels entre un des sujets (10) de la grappe particulière et un sujet (10) ne faisant pas partie de cette grappe particulière,
• Fonction de stockage de la description de processus contenant la ou les grappe(s) dans le fichier de processus, dans lequel la description de processus est stockée dans le fichier de processus dans le métalangage, et les sujets (10) sont définis dans le métalangage et les sujets (10) contiennent des instructions d'envoi et/ ou de réception de messages (11) .

2. Système selon la revendication 1, **caractérisé en ce que**
le gestionnaire de processus (8) présente une ou plusieurs des fonctions suivantes :
• Fonction de modification du nom des messages (11) individuels, dans lequel lorsque cette fonction est exécutée, le nom modifié du message (11) est automatiquement inscrit dans les instructions correspondantes des sujets (10) pour le traitement de ce message (11),
• Fonction de modification de nom d'un sujet (10), dans lequel lorsque cette fonction est exécutée, le nom modifié du sujet (10) est automatiquement inscrit dans les instructions correspondantes des sujets (10) qui référencent ce sujet (10),
• Fonction pour déterminer quel sujet (10) envoie un message (11) en premier,
• Fonction de définition de l'ordre dans lequel les messages (11) individuels sont envoyés, dans lequel il est possible de définir un embranchement de flux de messages dans des sujets individuels sur la base d'une décision avec des conditions correspondantes.

3. Système selon la revendication 2, **caractérisé en ce que**
la fonction de modification du nom des messages (11) individuels est conçue de telle sorte que lorsque cette fonction est exécutée, le nom modifié du message (11) est automatiquement inscrit dans les instructions d'envoi et de réception de messages (11).

4. Système selon une des revendications 1 à 3, **caractérisé en ce que**
le générateur de processus (6) comporte un gestionnaire de sujets (9) pour modifier le comportement de sujets (10) individuels.

5. Système selon la revendication 4, **caractérisé en ce que**
le gestionnaire de sujet (9) présente une ou plusieurs des fonctions suivantes :
• Fonction de limitation du contenu d'un message (11) à recevoir,
• Fonction de limitation du nombre d'expéditeurs potentiels d'un message (11) à recevoir,
• Fonction de répétition de certaines instructions,
• Fonction d'intégration d'un raffinement dans un sujet (10),
• Fonction d'émission de données vers un périphérique de sortie,
• Fonction de lecture de données sur un périphérique d'entrée,
• Fonction d'exécution d'une décision en fonction de paramètres prédéterminés,
• Fonction pour terminer le flux de processus.

6. Système selon une des revendications 1 à 5, **caractérisé en ce que**
le système a un gestionnaire de flux de travail qui est conçu de telle sorte qu'il guide l'utilisateur le long des états successifs des sujets (10) individuels de sorte que l'utilisateur puisse changer le comportement du sujet (10) correspondant par des entrées.

7. Système selon une des revendications 1 à 6, **caractérisé en ce que**
le système comprend au moins un ordinateur avec un dispositif de sortie (3) et un dispositif d'entrée (2) et le générateur de processus (6) et le générateur de code source (5) sont des modules logiciels qui sont stockés et exécutables sur l'ordinateur.

8. Procédé de génération d'un code source pour un programme informatique d'exécution ou de simulation d'un processus, dans lequel un système selon une des revendications 1 à 7 est utilisé, dans lequel plusieurs sujets (10) communiquent entre eux, comprenant les étapes suivantes :
- Génération d'une description de processus, dans lequel au moins une grappe spécifique est définie avec un nombre prédéterminé de sujets (10), et au moins un autre sujet (10) est défini, qui peut faire partie d'une autre grappe,
- Génération automatique de deux messages (11) entre toutes les paires de sujets (10) de la grappe, dans lequel chaque sujet (10) envoie un des deux messages (11) de la paire respective et reçoit l'autre,
- Fourniture d'une fonction de suppression des messages (11) individuels générés automatiquement et application de la fonction à des messages individuels,
- Fourniture et utilisation d'une fonction de génération de messages (11) individuels entre un des sujets (10) de la grappe particulière et le sujet (10) ne faisant pas partie de cette grappe particulière,
- Enregistrement de la description du processus avec les définitions entrées dans un fichier de processus,
- Génération automatique d'au moins un fichier de code source pour un programme informatique, qui contient des instructions respectives pour l'échange de messages entre les sujets (10) individuels.

9. Procédé selon la revendication 8, **caractérisé en ce que**
un code source (7) distinct est généré pour chaque grappe.
